# EUROPÄISCHE PATENTSCHRIFT

(11) **EP 1 904 323 B1**
(45) Veröffentlichungstag und Bekanntmachung des Hinweises auf die Patenterteilung: **29.09.2010**
(21) Anmeldenummer: 06775701.3
(22) Anmeldetag: 10.07.2006
(51) Int. Cl.: B60J 5/04

(54) **AGGREGATETRÄGER FÜR EINE KRAFTFAHRZEUGTÜR**
UNIT SUPPORT FOR A MOTOR VEHICLE DOOR
SUPPORT D'ORGANE POUR PORTIERE DE VEHICULE A MOTEUR

(30) Priorität: 11.07.2005 DE 102005033115
(43) Veröffentlichungstag der Anmeldung: 02.04.2008
(73) Patentinhaber: Brose Fahrzeugteile GmbH & Co. KG, Coburg, 96450 Coburg (DE)
(72) Erfinder: KRÜGER, Harald, 96407 Bamberg (DE); KRIESE, Olaf, 96450 Coburg (DE); SCHLECHTRIEMEN, Martin, 96173 Oberhaid (DE)
(74) Vertreter: Baumgärtel, Gunnar
(86) Internationale Anmeldenummer: PCT/DE2006/001217
(87) Internationale Veröffentlichungsnummer: WO 2007/006296

(56) Entgegenhaltungen:
- EP-A1- 0 855 301
- EP-A1- 1 132 234

## Beschreibung

Die Erfindung betrifft einen Aggregateträger für eine Kraftfahrzeugtür, der zum Einbau In die Kraftfahrzeugtür eingerichtet, d. h. ausgebildet und vorgesehen ist, und der im eingebauten Zustand zumindest einen Teil einer Türinnenhaut der Kraftfahrzeugtür bildet, nach dem Oberbegriff des Patentanspruchs 1.

Ein derartiger Aggregateträger dient zur Aufnahme unterschiedlicher Funktionskomponenten einer Kraftfahrzeugtür, wie z. B. eines Fensterhebers, eines Türschlosses, eines Lautsprechers und dergleichen. Er kann einerseits im Wesentlichen die komplette Türinnenhaut bilden, so dass er zum Einbau in eine Kraftfahrzeugtür mit deren Türaußenhaut - unmittelbar oder über einen zwischen Türinnenhaut und Türaußenhaut verlaufenden Verbindungs- und Versteifungsrahmen - befestigt wird. Andererseits kann der Aggregateträger auch nur einen Bestandteil der Türinnenhaut bilden, z. B. indem der Aggregateträger auf eine mit einem großflächigen Ausschnitt versehene Türinnenhaut aufzusetzen ist und hierbei jenen Ausschnitt überdeckt.

Einen wesentlichen Bestandteil am Aggregateträger vormontierten Kraftfahrzeugfensterhebers bildet mindestens eine Führungsschiene, die sich (entlang einer Verstellrichtung) zwischen einem ersten und einem zweiten Endabschnitt erstreckt und an der ein Mitnehmer des Fensterhebers auf einer (in Verstellrichtung verlaufenden) Verstellbahn beweglich geführt ist. Diese, gegebenenfalls gekrümmte, Verstellbahn wird definiert durch Führungsflächen der Führungsschiene, in die der Mitnehmer formschlüssig und entlang der Verstellbahn in Verstellrichtung beweglich eingreift. Der Mitnehmer ist einerseits, beispielsweise über ein Zugmittel in Form eines Seiles oder über einen Hebelmechanismus, mit einem Verstellantrieb des Fensterhebers gekoppelt, so dass eine vom Verstellantrieb erzeugte Antriebskraft auf den Mitnehmer übertragen werden kann und er hierdurch entlang der Führungsschiene bewegt wird, um eine mittels des Fensterhebers zu verstellende und am Mitnehmer angebundene Fensterscheibe - je nach Bewegungsrichtung - anzuheben oder abzusenken. Hierzu ist der Mitnehmer andererseits mit der zu verstellenden Fensterscheibe in bekannter Weise verbunden.

Ein wichtiger Gesichtspunkt bei der Anordnung eines Kraftfahrzeugfensterhebers auf einem Aggregateträger ist die Gewährleistung eines hinreichend großen Scheibenhubs, d. h. eines hinreichend großen Verstellweges des entlang der Führungsschiene bewegbaren und die Fensterscheibe tragenden Mitnehmers, so dass die Fensterscheibe zwischen einer möglichst vollständig geöffneten Position und einer geschlossenen Position in der zugeordneten Fensteröffnung eines Kraftfahrzeugs hin und her bewegbar (anheb- und absenkbar) ist. Dies muss in einer Kraftfahrzeugtür unter den Randbedingungen erreicht werden, dass regelmäßig nur begrenzter Platz für die Führungsschienen eines Fensterhebers zur Verfügung steht, so dass deren Länge In Verstellrichtung des zugeordneten Mitnehmers bzw. der hieran angebundenen Fensterscheibe nicht frei zur Maximierung des Scheibenhubs gewählt werden kann, und dass weiterhin ein derartiger Einbau des Aggregateträgers in eine Kraftfahrzeugtür ermöglicht wird, dass dieser im eingebauten Zustand - über eine Dichtung - feuchtigkeitsdicht an der Türkarosserie anliegt. Denn als Bestandteil der Türinnenhaut bildet der Aggregateträger gleichzeitig einen Teil der Nass-/Trockenraumtrennung einer Kraftfahrzeugtür, die der Trennung des vor der fahrzeuginnenraumseitigen Oberfläche der Türinnenhaut liegenden Trockenraums von dem hinter der außenraumseitigen Oberfläche der Türinnenhaut liegenden Nassraums dient.

Sofern es sich bei dem Kraftfahrzeugfensterheber um einen Zugmittelfensterheber handelt, bei dem ein flexibles Zugmittel entlang der mindestens einen Führungsschiene geführt ist, um einen die zu verstellende Fensterscheibe tragenden, mit der Führungsschiene längsbeweglich in Eingriff stehenden und mit dem Zugmittel verbundenen Mitnehmer auf der Führungsschiene in Verstellrichtung anzuheben oder abzusenken, so sind am Aggregateträger im Bereich der Führungsschiene typischerweise Umlenkelemente, insbesondere in Form von Umlenkrollen, angeordnet, mit denen das flexible Zugmittel derart umgelenkt wird, dass sich ein Abschnitt des flexiblen Zugmittels entlang der entsprechenden Führungsschiene erstreckt, wobei an diesem Abschnitt des flexiblen Zugmittels der der Führungsschiene zugeordnete Mitnehmer befestigt ist. Auf die Umlenkelemente und somit auf die Stellen, an denen die Umlenkelemente am Aggregateträger oder einem hiermit verbundenen Bauteil, wie z. B. einer Führungsschiene, angeordnet sind, können im Betrieb des Kraftfahrzeugfensterhebers erhebliche Kräfte wirken, die aufgenommen werden müssen. EP 0 855 301 A1 beschreibt einen Aggregateträger gemäß dem Oberbegriff des Anspruchs 1.

Der Erfindung liegt daher das Problem zugrunde, einen Aggregateträger der eingangs genannten Art zu schaffen, der mit einfachen Mitteln eine Optimierung eines am Aggregateträger vorgesehenen Fensterhebers ermöglicht.

Dieses Problem wird erfindungsgemäß durch die Schaffung eines Aggregateträgers mit den Merkmalen des Anspruchs 1 gelöst.

Danach ist am Aggregateträger ein (topfartiger) Hohlkörper, insbesondere in Form einer Höhlnase, einstückig angeformt, der die zur Führung des Mitnehmers dienende, in Verstellrichtung des Mitnehmers verlaufende Verstellbahn der Führungsschiene fortsetzt und/oder an dem ein Umlenkelement zur Umlenkung eines flexiblen Zugmittels des Kraftfahrzeugfensterhebers vorgesehen ist, mit dem das flexible Zugmittel derart umgelenkt wird, dass sich ein Abschnitt des flexiblen Zugmittels entlang der zugeordneten Führungsschiene erstreckt. An diesem Abschnitt des flexiblen Zugmittels ist der entlang der Führungsschiene verstellbare Mitnehmer zu befestigen.

Nach der erfindungsgemäßen Lösung wird also die Hublänge des Fensterhebers, d. h., der Verstellweg für den Mitnehmer und hiermit für die zu verstellende Fensterscheibe, nicht allein durch die Länge der Führungsschienen des Fensterhebers in Verstellrichtung bestimmt, sondern die Hublänge wird vergrößert durch den mindestens einen einstückig am Aggregateträger angeformten Hohlkörper, der die Verstellbahn der Führungsschiene entlang der Verstellrichtung fortsetzt (und somit verlängert) sowie alternativ oder ergänzend zur Aufnahme eines Umlenkelementes des Fensterhebers dient, welches wiederum eine Begrenzung des Verstellweges des Mitnehmers entlang der Verstellrichtung definiert; denn vom Umlenkelement geht ja der Abschnitt des flexiblen Zugmittels ab, der sich entlang der Führungsschienen erstreckt und an dem der die Fensterscheibe tragende Mitnehmer befestigt ist. Somit führt auch eine Verlagerung des Umlenkelementes über ein Ende der Führungsschiene hinaus zu einer Vergrößerung der Hublänge des Fensterhebers, also des Verstellweges des an der Führungsschiene geführten Mitnehmers.

Ferner können an einem solchen Hohlkörper auch weitere Komponenten des Fensterhebers, wie z. B. Dämpfungsmittel, festlegbar (aufsteckbar) sein.

Besonders bevorzugt ragt der am Aggregateträger angeformte. Hohlkörper In Erstreckungsrichtung der zugeordneten Führungsschiene über die Dichtung bzw. den Dichtungsbereich hinaus, über den der Aggregateträger (entlang seines umlaufenden äußeren Randes) im eingebauten Zustand feuchtigkeitsdicht an der Türkarosserie anliegt.

So lässt sich mit der erfindungsgemäßen Lösung erreichen, dass der Mitnehmer über einen für die dichtende Befestigung des Aggregateträgers an einer Kraftfahrzeugtür dienenden Randabschnitt des Aggregateträgers hinaus verfahren werden kann, ohne dass die Nass-/Trockenraum-Trennung beeinträchtigt wird.

Der Hohlkörper kann weiterhin zur Versteifung des Aggregateträgers im Bereich des zugeordneten Endes der betrachteten Führungsschiene dienen, wozu der Hohlkörper bevorzugt im Wesentlichen geschlossen ausgebildet ist und beispielsweise lediglich auf einer dem Aggregateträger zugewandten Stirnseite eine Öffnung aufweist. Mit anderen Worten ausgedrückt, ist der Hohlkörper als ein nur einseitig offener, im Übrigen allseitig geschlossener (topfartiger, genauer nasenförmiger) Hohlkörper ausgebildet.

Die Querschnittsfläche jener Öffnung ist dabei bevorzugt im Wesentlichen senkrecht zu der Fläche bzw. Ebene orientiert, die von dem Aggregateträger aufgespannt wird, also der so genannten Türebene. Bezogen auf den in ein Kraftfahrzeug eingebauten Zustand wird die Türebene typischerweise durch die entlang der Vorwärtsfahrtrichtung verlaufende Fahrzeuglängsachse (x-Achse) sowie die vom Fahrzeugboden in Richtung auf das Fahrzeugdach erstreckte vertikale Fahrzeugachse (z-Achse) aufgespannt. Die Türebene wird dementsprechend durch die so genannte xz-Ebene gebildet. Die Öffnung des Hohlkörpers erstreckt sich demgegenüber bevorzugt in der durch die Fahrzeuglängsachse (x-Achse) und die senkrecht sowohl zur Fahrzeuglängsachse als auch zur vertikalen Fahrzeugachse verlaufende horizontale Fahrzeugquerachse (y-Achse) aufgespannten Ebene, d. h. der xy-Ebene. Dies bedeutet, dass die Öffnung des Hohlkörpers des Hohlkörpers dem mittleren Bereich (zentralen Bereich) des Aggregateträgers zugewandt ist. Die Öffnung dient insbesondere auch der leichteren Entformbarkeit eines zur Herstellung des Hohlkörpers (z.B. durch Spritzgießen) verwendet Werkzeugs.

Der Hohlkörper ist bevorzugt in Erstreckungsrichtung der Führungsschiene erstreckt und verjüngt sich entlang dieser Richtung weg von dem zugeordneten Ende der betrachteten Führungsschiene.

Sofern die Führungsschiene einstückig am Aggregateträger angeformt ist, kann der Hohlkörper wiederum einstückig am zugeordneten Ende der Führungsschiene angeformt sein und ragt in diesem Fall bevorzugt über das eigentliche Ende der Führungsschiene (ohne Hohlkörper) hinaus..

Ein gegebenenfalls am Hohlkörper vorgesehenes Umlenkelement kann entweder einstückig an diesem angeformt sein oder als separates Bauelement an diesem festgelegt sein. Im letztgenannten Fall kann der Hohlkörper einen Lagerzapfen aufweisen, auf dem das mit einer Lageröffnung versehene Umlenkelement (drehbar) gelagert ist, wobei der Lagerzapfen weiterhin eine (z. B. durch plastische Deformation erzeugte) Verbreiterung an einer Stirnseite aufweist, die den Rand der Lageröffnung des Umlenkelementes übergreift.

Gemäß einer Weiterbildung der Erfindung wird das am Hohlkörper vorgesehene Umlenkelement im eingebauten Zustand des Aggregateträgers von einer Brüstungsverstärkung der Kraftfahrzeugtür übergriffen, welche gleichzeitig zur Lagerung des Umlenkelementes dienen kann.

Ein weiterer Aspekt der Erfindung, der auch unabhängig von dem vorstehend beschriebenen Erfindungsgegenstand vorteilhaft realisiert werden kann, betrifft speziell den Fall, dass eine Führungsschiene für einen Kraftfahrzeugfensterheber einstückig in den Aggregateträger integriert, also an diesem angeformt ist. Auf der einstückig in den Aggregateträger integrierten Führungsschiene ist ein Mitnehmer des Fensterhebers entlang einer Verstellbahn beweglich geführt, der einerseits, beispielsweise über ein Zugmittel in Form eines Seiles oder über einen Hebelmechanismus, mit einem Verstellantrieb des Fensterhebers gekoppelt ist, so dass eine vom Verstellantrieb erzeugte Antriebskraft auf den Mitnehmer übertragen werden kann und er hierdurch entlang der Führungsschiene bewegt wird, um eine mittels des Fensterhebers zu verstellende Fensterscheibe - je nach Bewegungsrichtung - anzuheben oder abzusenken. Hierzu ist der Mitnehmer andererseits mit der zu verstellenden Fensterscheibe in bekannter Weise verbunden.

Die einstückige Integration einer Führungsschiene in den Aggregateträger reduziert die Anzahl der beim Zusammenbau des Fensterhebers erforderlichen Bauteile und führt somit zu einem vereinfachten Aufbau und einer Erleichterung der Montage. Allerdings ist zu beachten, dass an der Führungsschiene im Betrieb des Fensterhebers erhebliche Kräfte wirken können, so dass an die Führungsschiene sowie an deren Anbindung an den Aggregateträger entsprechende Anforderungen hinsichtlich Stabilität und Steifigkeit zu stellen sind. Dies gilt insbesondere im Fall eines aus Kunststoff bestehenden Aggregateträgers, der den Vorteil bietet, dass die einstückige Anformung einer Führungsschiene für den Fensterheber in besonders einfacher Weise möglich ist.

Eine Möglichkeit eine hinreichende Steifigkeit der Führungsschiene sowie eine stabile Anbindung an den Aggregateträger zu gewährleisten, besteht in der Ausbildung von Versteifungsrippen; hierbei muss jedoch Verzugstendenzen beim Herstellungsprozess des Aggregateträgers vorgebeugt werden.

Es ist daher ein wieteres Ziel, einen Aggregateträger zu schaffen, der sich bei einfachem Aufbau durch eine einstückig angeformte Führungsschiene für einen Kraftfahrzeugfensterheber durch hohe Stabilität und Steifigkeit auszeichnet. Hierzu umfasst die einstückig am Aggregateträger angeformte Führungsschiene mindestens zwei Führungskanäle, die quer zu der durch die Verstellbahn definierten Verstellrichtung des Mitnehmers (und somit der Fensterscheibe) voneinander beabstandet sind und in denen jeweils ein Führungsabschnitt des zugeordneten Mitnehmers entlang der Führungsschiene verschieblich geführt ist.

Durch die Anformung zweiter voneinander beabstandeter Führungskanäle zur Führung des Mitnehmers am Aggregateträger ist einerseits eine zuverlässige, definierte Führung des Mitnehmers gewährleistet, indem der Mitnehmer mit je einem Führungsabschnitt in je einen der beiden Führungskanäle angreift. Andererseits tragen die beiden Führungskanäle gleichzeitig zur Versteifung des Aggregateträgers im Bereich der Führungsschiene und somit sowohl zu einer Versteifung der Führungsschiene selbst als auch zu einer Versteifung der Anbindung der Führungsschiene an den Aggregateträger bei.

Derartige Führungskanäle lassen sich, wie nachfolgend anhand unterschiedlicher Ausführungsbeispiele gezeigt werden wird, in einfacher Weise bei der Herstellung eines Aggregateträgers, z. B. durch Spritzgießen, anformen, indem ein Spritzgusswerkzeug mit entsprechend verfahrbaren Schiebern bei der Herstellung des Aggregateträgers verwendet wird.

Hiermit lässt sich eine hohe Steifigkeit und Stabilität des Aggregateträgers im Bereich der Führungsschiene insbesondere bei einer im Wesentlichen konstanten Wandstärke (Materialdicke) des Aggregateträgers sowohl in den Bereichen außerhalb der Führungsschiene als auch im Bereich der Führungsschiene selbst erreichen.

Hierbei sind die seitlichen Führungskanäle am Übergang zur zugeordneten Oberfläche des Aggregateträgers vorzugsweise geschlossen, was neben einer Maximierung der Steifigkeit auch eine seitliche Ausfallsicherung für den Mitnehmer mit sich bringt.

Gemäß einer bevorzugten Ausführungsform wird der jeweilige Führungskanal der Führungsschiene gebildet durch einen von einer Oberfläche des Aggregateträgers abstehenden Vorsprung, der zusammen mit jener Oberfläche des Aggregateträgers eine kanalartige Führung für den jeweils zugeordneten Führungsabschnitt des Mitnehmers definiert. Hierzu weist der jeweilige Vorsprung beispielsweise einen (abgewinkelten) Abschnitt auf, der den jeweils zugeordneten Führungsabschnitt des Mitnehmers übergreift und dabei von diesem gleichzeitig umgriffen werden kann.

Dabei stehen die beiden abgewinkelten Abschnitte bevorzugt in unterschiedlicher Richtung von dem jeweils zugeordneten, einen Führungskanal definierenden Vorsprung des Aggregateträgers ab, z. B. in der Weise, dass die beiden abgewinkelten Abschnitte einander zugewandt sind oder einander abgewandt sind.

Gemäß einer vorteilhaften Weiterbildung der Erfindung, die insbesondere das Entformen eines zur Herstellung des Aggregateträgers verwendeten Spritzgusswerkzeugs erleichtert, verlaufen die abgewinkelten Abschnitte der vom Aggregateträger abstehenden Vorsprünge geneigt zur zugeordneten Oberfläche des Aggregateträgers, und zwar in der Weise, dass sie mit ihren freien Enden von der Oberfläche des Aggregateträgers weg weisen.

Für eine zusätzliche Stabilisierung des Aggregateträgers im Bereich der Führungsschiene sowie für eine besonders definierte Führung des Mitnehmers an der Führungsschiene kann zusätzlich zu den beiden Kanälen ein zwischen den beiden Kanälen verlaufender - und von jedem der beiden Kanäle beabstandeter - Vorsprung an dem Aggregateträger angeformt sein, der von einem zugeordneten mittleren Abschnitt des an der Führungsschiene beweglich geführten Mitnehmers umgriffen wird.

Für eine weitere Erhöhung der Steifigkeit des Aggregateträgers im Bereich der Führungsschiene können dort - zusätzlich zu den beiden Führungskanälen - Versteifungssicken und Auswölbungen vorgesehen sein, die nicht der Führung des Mitnehmers selbst dienen, sondern vielmehr in erster Linie einer zusätzlichen Versteifung der Führungsschiene. Diese Versteifungssicken oder Wölbungen können beispielsweise in die Führungskanäle der Führungsschiene integriert sein, im Übergangsbereich zwischen einem jeweiligen Führungskanal und der Oberfläche des Aggregateträgers vorgesehen sein oder (vor allem zwischen den beiden Führungsschienen) unmittelbar in der Oberfläche des Aggregateträgers ausgebildet sein.

An dem Aggregateträger können im Bereich der Führungsschiene vorteilhaft noch weitere Komponenten eines Fensterhebers angeformt sein, wie zum Beispiel eine Zugriffssperre zu einem Zugmittel des Fensterhebers, zu elektrischen Kabeln und/oder zu einem Betätlgungsbowden oder einem Betätigungsgestänge eines Schließsystems. Ferner können wasserabweisende Bereiche am Aggregateträger angeformt sein.

Schließlich können an den Führungskanälen - außerhalb der zum Führen des Mitnehmers dienenden Führungsflächen - lokal zusätzliche Versteifungsmittel, gegebenenfalls auch Versteifungsrippen, angeformt sein, um lokale Verwerfungen zu korrigieren.

Weitere Einzelheiten und Vorteile der Erfindung werden bei der nachfolgenden Beschreibung von Ausführungsbeispielen anhand der Figuren deutlich werden.

Es zeigen:
- Fig. 1a: einen Aggregateträger zum Einbau in eine Kraftfahrzeugtür mit einer einstückig angeformten Führungsschiene für einen Kraftfahrzeugfensterheber und mit einem hierauf geführten Mitnehmer;
- Fig. 1b: eine perspektivische Darstellung der Führungsschiene aus Figur 1a im Bereich ihres oberen Endes;
- Fig. 1c: eine zweite perspektivische Darstellung der Führungsschiene aus Figur 1a im Bereich ihres oberen Endes;
- Fig. 2: einen Querschnitt durch das obere Ende einer Führungsschiene in einer gegenüber den Figuren 1a bis 1c abgewandelten Ausführungsform;
- Fig. 3a: eine schematische Seitenansicht einer Kraftfahrzeugtür mit einer einen großflächigen Ausschnitt aufweisenden Türinnenhaut;
- Fig. 3b: einen Querschnitt durch die Kraftfahrzeugtür aus Figur 3a im Bereich des oberen Randes des Ausschnittes, wobei dieser mit einem eine Führungsschiene tragenden Aggregateträger überdeckt ist;
- Fig. 4: eine perspektivische Darstellung des oberen Endes einer Führungsschiene eines Kraftfahrzeugfensterhebers in einer weiteren Ausführungsform;
- Fig. 5: eine schematische Darstellung eines Querschnitts durch einen weiteren Aggregateträger mit einer hierauf angeordneten Führungsschiene;
- Fig. 6a: einen Aggregateträger der in Figur 1a dargestellten Art nach dem Einbau in eine Kraftfahrzeugtür;
- Fig. 6b: einen Querschnitt durch den Aggregateträger aus Figur 6a im Bereich der Führungsschiene;
- Fig. 6c: eine erste Abwandlung der Führungsschiene aus Figur 6b;
- Fig. 7: eine zweite Abwandlung der Führungsschiene aus Figur 6b;
- Fig. 8: eine dritte Abwandlung der Führungsschiene aus Figur 6b;
- Fig. 9: eine vierte Abwandlung der Führungsschiene aus Figur 6b;
- Fig. 10: eine fünfte Abwandlung der Führungsschiene aus Figur 6b;
- Fig. 11: eine schematische Darstellung eines zur Herstellung einer Führungsschiene gemäß Figur 10 verwendbaren Spritzgusswerkzeugs.

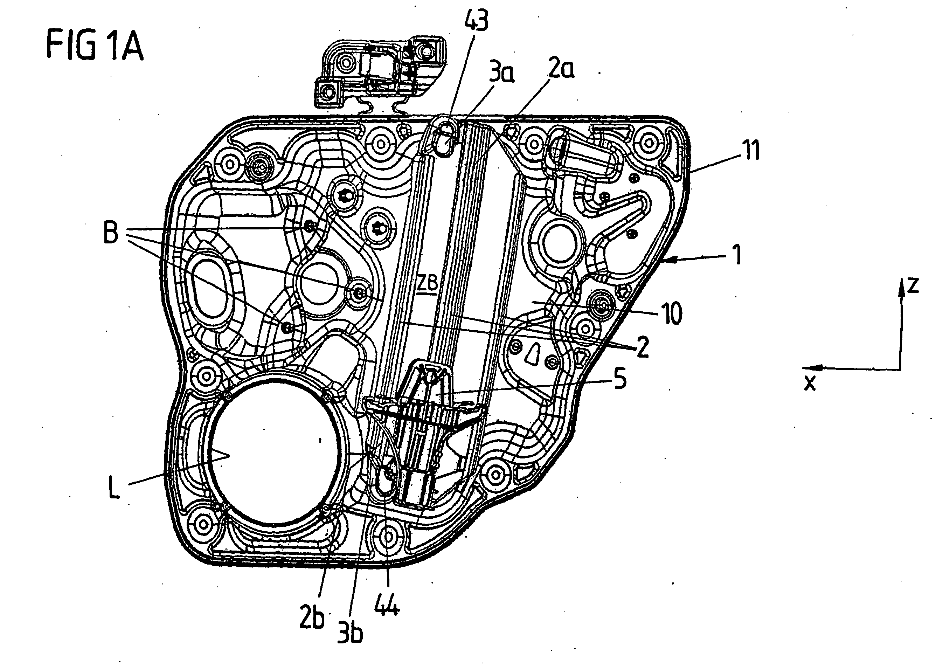

In Figur 1a ist perspektivisch ein Aggregateträger 1 für eine Kraftfahrzeugtür dargestellt, der zum Einbau in eine Kraftfahrzeugtür ausgebildet vorgesehen ist, und zwar zur Anordnung auf der Türinnenhaut einer Kraftfahrzeugtür, wobei der Aggregateträger 1 einen großflächigen Ausschnitt der Türinnenhaut überdeckt und mit seinem äußeren, umlaufenden Rand 11 über eine Dichtung dichtend an der Türinnenhaut anliegt.

Der Aggregateträger 1 bildet in diesem, in eine Kraftfahrzeugtür eingebauten Zustand, einen Bestandteil der Türinnenhaut und dient gemeinsam mit dieser der Trennung des Nassraums vom Trockenraum der Kraftfahrzeugtür. Der Nassraum der Kraftfahrzeugtür liegt dabei zwischen der Türinnenhaut und einer Türaußenhaut, die eine äußere Designfläche der Kraftfahrzeugtür bildet. Der Trockenraum liegt demgegenüber auf der dem Fahrzeuginnenraum zugewandten Seite der Türinnenhaut, welche in der Regel mittels einer Türinnenverkleidung überdeckt ist.

Ein Aggregateträger 1 der in Figur 1a dargestellten Art, der im Ausführungsbeispiel aus Kunststoff besteht, jedoch auch aus einem anderen Material, wie z.B. Metall gefertigt sein kann, nimmt sowohl auf seiner trockenraumseitigen Oberfläche als auch auf seiner - in der Ansicht gemäß Figur 1a erkennbaren - nassraumseitigen Oberfläche 10 Funktionskomponenten der Kraftfahrzeugtür auf, die vor dem Einbau des Aggregateträgers 1 an diesem vormontiert werden können und dann zusammen mit dem Aggregateträger 1 als komplett vorgefertigtes Türmodul an einer Kraftfahrzeugtür angeordnet werden. Dabei sind auf der - in Figur 1a nicht sichtbaren - Trockenraumseite des Aggregateträgers 1 vor allem feuchtigkeitsempfindliche Funktionskomponenten, wie z. B. elektrische und elektronische Baugruppen, und auf der nassraumseitigen Oberfläche 10 des Aggregateträgers 1 insbesondere feuchtigkeitsunempfindliche Funktionskomponenten, wie z. B. die Verstellmechanik eines Fensterhebers, vorzusehen.

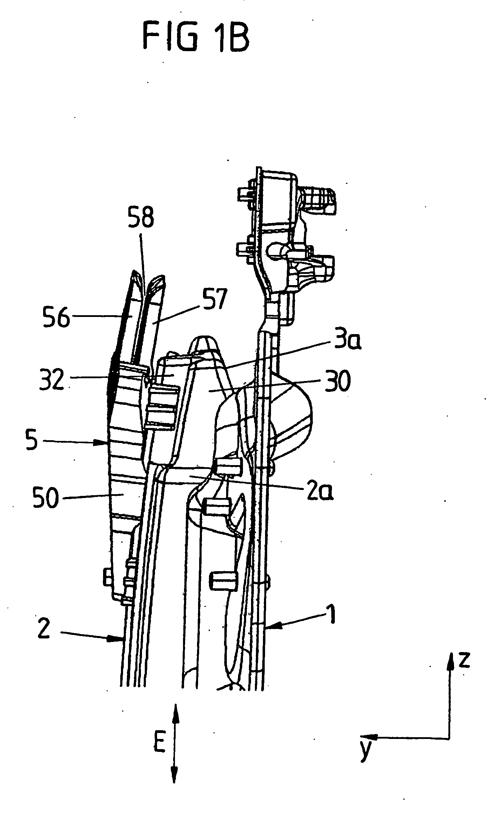

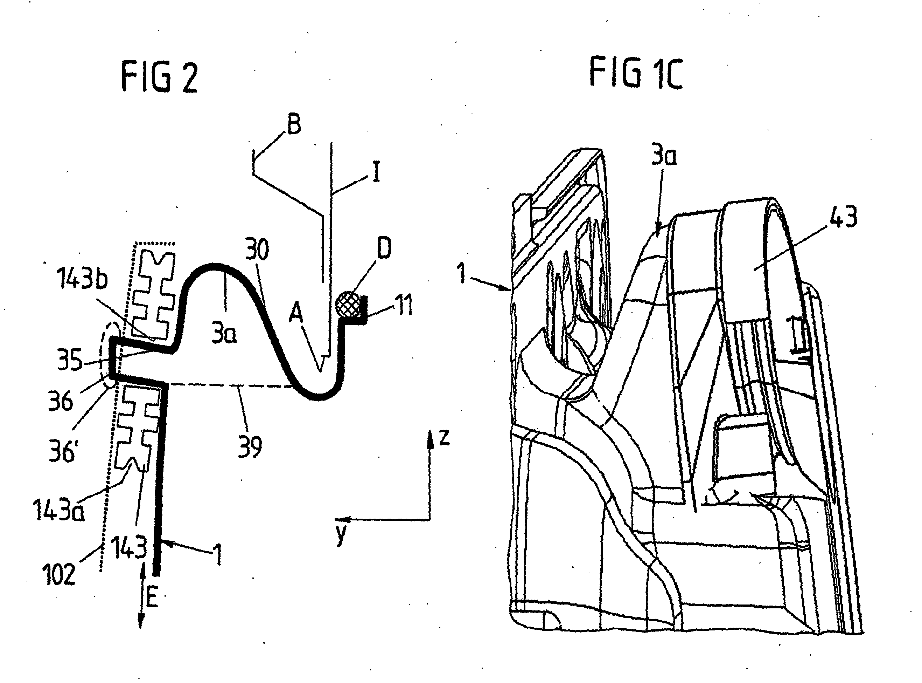

Bei dem in Figur 1 a gezeigten Aggregateträger 1 ist auf der nassraumseitigen Oberfläche 10 eine Führungsschiene 2 einstückig angeformt, auf der ein Mitnehmer 5 entlang einer Verstellrichtung E einer mittels des Fensterhebers zu verstellenden Fensterscheibe längsbeweglich geführt ist. Die Verstellrichtung E, die mit der Erstreckungsrichtung der Führungsschiene 2 zusammenfällt, erstreckt sich im Wesentlichen entlang der vertikalen Fahrzeugachse z und somit quer zur Fahrzeuglängsachse x.

Im Bereich ihres - in Verstellrichtung z betrachtet - oberen und unteren Endabschnittes 2a bzw. 2b ist an der Führungsschiene 2 jeweils ein Hohlkörper 3a, 3b in Form einer Hohlnase angeformt, der mit einem Grundkörper 30 einen Hohlraum im Wesentlichen vollständig umschließt und auf den ein Umlenkelement 43 bzw. 44 aufgesteckt ist, das zur Umlenkung eines flexiblen Zugmittels (insbesondere in Form eines Seiles) dient, Ober das der Mitnehmer 5 mit einem Verstellantrieb des Fensterhebers gekoppelt ist.

Der Antriebsmotor des Verstellantriebs und eine gegebenenfalls zugehörige Steuerelektronik sind auf der in Figur 1a nicht erkennbaren, trockenraumseitigen Oberfläche des Aggregateträgers 1 anzuordnen. Ein dem Antriebsmotor nachgeordnetes Getriebe des Verstellantriebs, über das im Betrieb des Antriebsmotors mittels einer Seiltrommel oder dergleichen die vom Antriebsmotor erzeugte Verstellkraft in das zur Betätigung des Mitnehmers 5 vorgesehene Zugmittel eingeleitet wird, ist demgegenüber bevorzugt auf der nassraumseitigen Oberfläche 10 des Aggregateträgers 1 zu befestigen. Hierzu sind dort entsprechende Befestigungsmittel B vorgesehen.

Weiterhin ist in dem Aggregateträger 1 eine Aufnahmeöffnung L für einen Lautsprecher erkennbar.

In Figur 1b ist der obere Endabschnitt der einstückig am aus Kunststoff bestehenden Aggregateträger 1 angeformten Führungsschiene 2 dargestellt. Diese weist dort einen einstückig angeformten, im Wesentlichen geschlossenen Hohlkörper 3a in Form einer Hohlnase auf, auf die das in Figur 1a gezeigte - jedoch in Figur 1b zur besseren Erkennbarkeit des Hohlkörpers 3a nicht mit dargestellte - obere Seilumlenkelement 43 aufsteckbar ist, wie in Figur 1c gezeigt. Ferner bildet der Hohlkörper 3a in Form einer Hohlnase ein Mittel zur Hublängenvergrößerung, indem er eine Führung des Mitnehmers 5 über den oberen Endabschnitt 2a der Führungsschiene 1 hinaus ermöglicht. Hierzu ist der Hohlkörper 3a mit einstückig angeformten Führungsflächen 32 für den Mitnehmer 5 versehen.

Anhand Figur 1b ist weiterhin erkennbar, dass der Mitnehmer 5 einen Grundkörper 50 aufweist, über den er in bekannter Weise formschlüssig, jedoch in Verstellrichtung z verschieblich an der Führungsschiene 2 geführt ist. Ferner weist der Mitnehmer 5 eine Scheibenaufnahme 58 für eine zu verstellende Fensterscheibe auf, die zwischen zwei Klemmbacken 56, 57 des Mitnehmers 5 ausgebildet ist und in der die Fensterscheibe klemmend und zusätzlich formschlüssig, z. B. mittels eines eine Scheibenöffnung durchgreifenden Befestigungsbolzens, aufnehmbar ist.

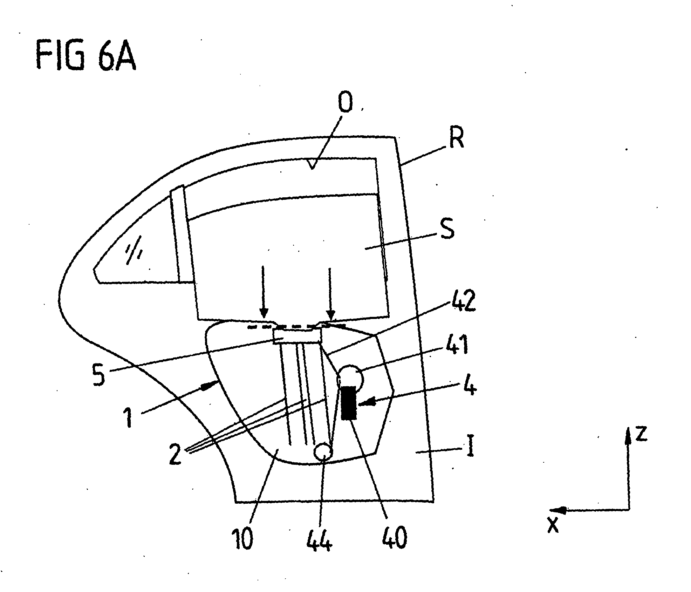

Figur 6a zeigt einen Aggregateträger 1 der anhand der Figuren 1a und 1b beschriebenen Art nach dem Einbau in eine Kraftfahrzeugtür. Von der Kraftfahrzeugtür sind in Figur 6a die Nassraumseite einer Türinnenhaut I sowie ein mit der Türinnenhaut verbundener Fensterrahmen R erkennbar, welcher eine mittels einer Fensterscheibe S verschließbare Scheibenöffnung O definiert. Die Fensterscheibe S kann mittels eines zugeordneten Fensterhebers entlang einer Verstellrichtung, die im Wesentlichen der vertikalen Fahrzeugachse z entspricht, angehoben und abgesenkt werden, um die Scheibenöffnung O zu verschließen oder freizugeben.

Der Fensterheber umfasst hierzu einen Verstellantrieb 4 mit einem Antriebsmotor 40 und einem nachgeordneten Getriebe 41, welches das im Betrieb des Antriebsmotors 40 erzeugte Antriebsmoment in eine Drehbewegung einer Seiltrommel umsetzt, die von einem flexiblen Zugmittel 42 in Form eines Seiles umschlungen ist. Dieses Seil ist mittels der in Figur 1a gezeigten, am oberen bzw. unteren Endabschnitt 2a, 2b der Führungsschiene 2 vorgesehenen oberen und unteren Seilumlenkelemente 43, 44 derart umlenkbar, dass sich ein Abschnitt des Zugmittels 42 entlang der Führungsschiene 2, und damit in Verstellrichtung der zu verstellenden Fensterscheibe S, erstreckt.

Der entlang der Führungsschiene 2 geführte Abschnitt des Zugmittels ist mit dem längsverschleblich auf der Führungsschiene 2 gelagerten Mitnehmer 5 verbunden, so dass dieser im Betrieb des Antriebsmotors 40 - in Abhängigkeit von dessen Drehrichtung - durch das Zugmittel 42 entlang der Führungsschiene 2 angehoben oder abgesenkt wird. Hierdurch wird in entsprechender Weise die vom Mitnehmer 5 aufgenommene Fensterscheibe S entlang der Verstellrichtung z zum Verschließen der Scheibenöffnung O angehoben oder zum Freigeben der Scheibenöffnung O abgesenkt.

Anhand der Figuren 2b bis 6 werden nun unterschiedliche Ausführungsbeispiele der am Aggregateträger 1 einstückig angeformten Führungsschiene 2 erläutert werden.

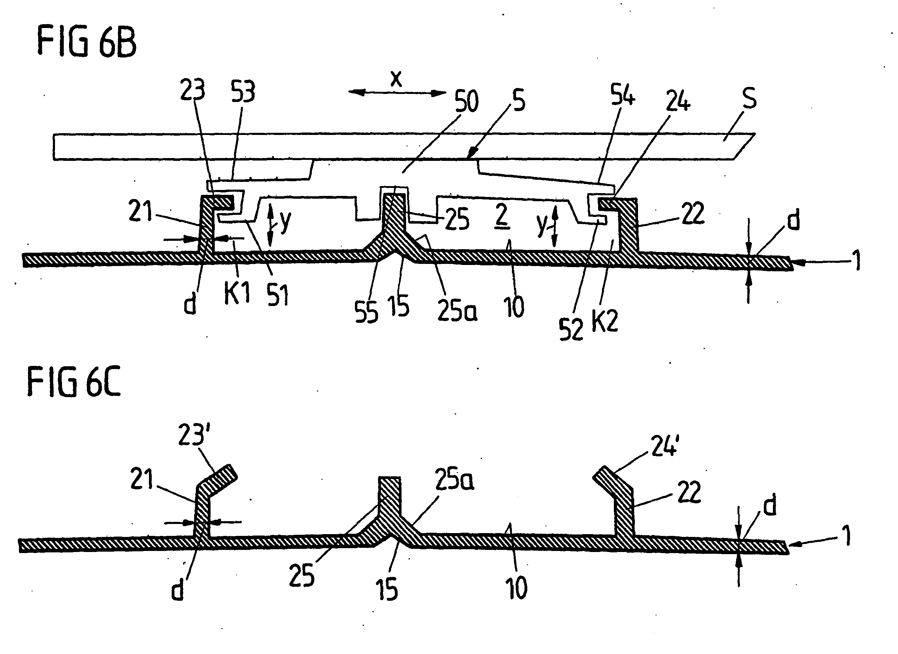

Gemäß Figur 6b stehen von der nassraumseitigen Oberfläche 10 des Aggregateträgers 1 zwei quer zur Verstellrichtung des Mitnehmers 5 und der zu verstellenden Fensterscheibe S, nämlich entlang der Fahrzeuglängsachse x, voneinander beabstandete Vorsprünge 21, 22 ab, die jeweils einen abgewinkelten Abschnitt 23 bzw. 24, hier in Form je eines abgewinkelten Endabschnittes, aufweisen. Die beiden abgewinkelten Endabschnitte 23, 24 sind dabei räumlich derart orientiert, dass sie im Wesentlichen parallel zur nassraumseitigen Oberfläche 10 des Aggregateträgers 1 verlaufen und einander zugewandt sind. Die beiden Vorsprünge 21, 22 bilden mit ihren abgewinkelten Endabschnitten 23, 24 sowie mit der nassraumseitigen Oberfläche 10 des Aggregateträgers 1 jeweils einen Führungskanal K1 bzw. K2 zur Führung des Mitnehmers 5.

Weiterhin ist zwischen den beiden Führungskanälen K1, K2 bzw. den entsprechenden mit abgewinkelten Endabschnitten 23, 24 versehenen Vorsprüngen 21, 22 ein weiterer Vorsprung 25 an der nassraumseitigen Oberfläche 10 des Aggregateträgers 1 angeformt, der sich am Übergang zur nassraumseitigen Oberfläche 10 des Aggregateträgers 1 konisch verbreitert. Unterhalb der konischen Verbreiterung 25a jenes mittleren Vorsprungs 25 ist im Aggregateträger 1 eine Sicke 15 ausgebildet, so dass der Aggregateträger 1 sowie die am Aggregateträger 1 angeformte, durch die Vorsprünge 21, 22, 25 gebildete Führungsschiene 2 durchgängig eine im Wesentlichen konstante Materialdicke d aufweisen.

Der auf der Führungsschiene 2 geführte Mitnehmer 5 weist an seinem der Führung dienenden Grundkörper 50 insgesamt drei Führungsabschnitte auf, von denen zwei seitliche Führungsabschnitte 51, 53 bzw. 52, 54 zur Führung in jeweils einem der Führungskanäle K1, K2 vorgesehen sind und ein dritter, mittlerer Führungsabschnitt 55 zur Führung auf dem mittleren Vorsprung 25 der Führungsschiene 2 dient.

Die beiden seitlichen Führungsabschnitte 51, 53 und 52, 54 des Mitnehmers 5 weisen jeweils einen Steg 51 bzw. 52 auf, der einen abgewinkelten Endabschnitt 23 bzw. 24 der beiden seitlichen Vorsprünge 21, 22 der Führungsschiene 2 untergreift. Ferner ist an den seitlichen Führungsabschnitten 51, 53; 52, 54 des Mitnehmers 5 jeweils ein weiterer Steg 53 bzw. 54 vorgesehen, der den zugeordneten abgewinkelten Endabschnitt 23 bzw. 24 übergreift.

Der mittlere Führungsabschnitt 55 am Grundkörper 50 des Mitnehmers 5 bildet eine Aufnahme, die den mittleren Vorsprung 25 der Führungsschiene 2 umgreift.

Somit ist der Mitnehmer 5 in beiden Raumrichtungen x (Fahrzeuglängsachse) und y (horizontale Fahrzeugquerachse), die im Wesentlichen senkrecht zur Verstellrichtung des Mitnehmers 5 und der Fensterscheibe S verlaufen, definiert formschlüssig an der Führungsschiene 2 geführt. Der mittlere Vorsprung 25 der Führungsschiene 2 dient dabei zur Positionierung des Mitnehmers 5 bezüglich der Fahrzeuglängsachse x, so dass dieser entlang dieser Raumrichtung x keine Bewegungen ausführen kann. Die beiden seitlichen Führungskanäle K1, K2 der Führungsschiene 2 dienen demgegenüber zur Positionierung des Mitnehmers 5 entlang der horizontalen Fahrzeugquerachse y, so dass der Mitnehmer 51 auch in dieser Richtung keine Bewegungen ausführen kann. Der Mitnehmer 5 ist somit ausschließlich entlang der Verstellrichtung z, vergleiche Figur 6a, beweglich an der Führungsschiene 2 gelagert.

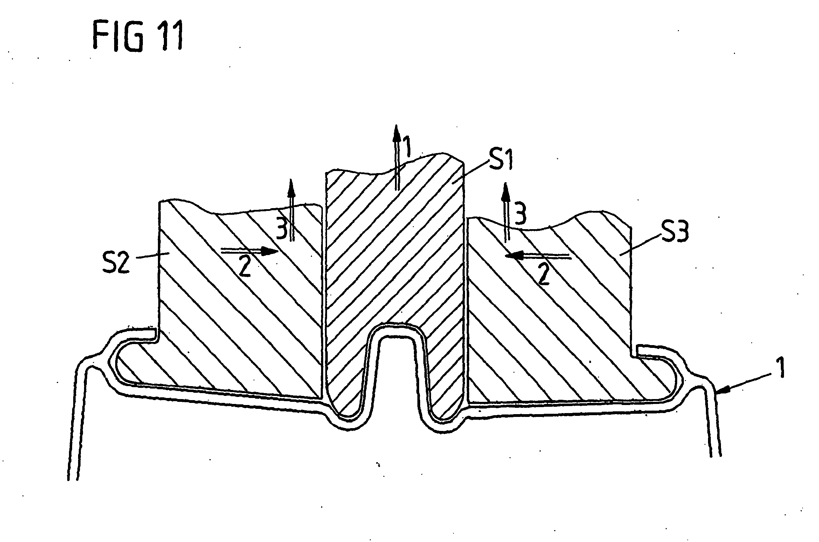

In Figur 6c ist eine Abwandlung des Ausführungsbeispieles aus Figur 6b dargestellt; wobei der Unterschied darin besteht, dass die abgewinkelten Endabschnitte 23', 24' der die Führungskanäle K1, K2 bildenden, am Aggregateträger 1 angeformten Vorsprünge 21, 22 geneigt zur nassraumseitigen Oberfläche 10 des Aggregateträgers 1 verlaufen, und zwar in der Weise, dass sich zu den freien Enden der beiden abgewinkelten Endabschnitte 23', 24' hin der Abstand zur nassraumseitigen Oberfläche 10 des Aggregateträgers 1 vergrößert. Dies erleichtert die Herstellbarkeit der Führungsschiene 2 durch ein Spritzgussverfahren, indem die Entformung des hierbei verwendeten Spritzgusswerkzeugs vereinfacht wird, wie nachfolgend anhand Figur 11 noch erläutert werden wird.

Zur Fortsetzung der vorstehend anhand der Figuren 6a bis 6c dargestellten, Führungskanäle bildenden Führungsflächen der Führungsschiene 2 entlang der Erstreckungsrichtung E der Führungsschiene 2 und somit der Verstellrichtung des Fensterhebers dienen die weiter oben anhand Figur 1b beschriebenen, einstückig am oberen Hohlkörper 3a angeformten Führungsflächen 32. Diese bilden einen Fortsatz der Führungsschiene 2 bzw. genauer der Führungsflächen/Führungskanäle der Führungsschiene 2 entlang der Verstellrichtung E. Dies bedingt eine Hublängenvergrößerung, also eine Vergrößerung des maximalen Verstellweges des Mitnehmers 5 auf der Führungsschiene 2 entlang der Verstellrichtung E, indem die am Hohlkörper 3a vorgesehenen Führungsflächen 32 eine Führung des Mitnehmers 5 in Verstellrichtung E über den oberen Endabschnitt 2a der Führungsschiene 2 hinaus ermöglichen. Entsprechendes gilt für den in Figur 1a gezeigten unteren Hohlkörper 3b, der sich an den unteren Endabschnitt 2b der Führungsschiene. 2 anschließt und im Wesentlichen identisch ausgebildet ist, wie der anhand der Figuren 1b und 1c beschriebene obere Hohlkörper 3a.

Neben einer Verlängerung der Führungsflächen für den Mitnehmer 5 entlang der Verstellrichtung E ermöglichen die Hohlkörper 3a, 3b auch eine Lagerung der Umlenkelemente 43, 44 des Fensterhebers, die ebenfalls zu einer Hublängenvergrößerung beiträgt, wie weiter unten anhand Figur 2 noch näher erläutert werden wird.

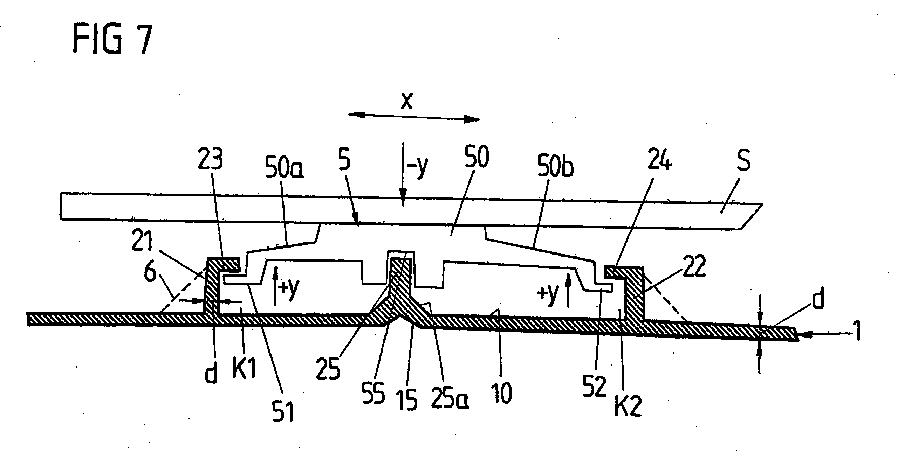

Figur 7 zeigt eine weitere Abwandlung des Ausführungsbeispieles aus Figur 6b, wobei hier der Unterschied darin besteht, dass die seitlichen Führungsabschnitte des Mitnehmers 5 lediglich erste Stege 51, 52 aufweisen, die die abgewinkelten Endabschnitte 23, 24 der die Führungskanäle K1, K2 bildenden Vorsprünge 21, 22 untergreifen, also in den jeweiligen Führungskanal K1, K2 hineinragen, aber keine zweiten Stege, welche jene seitlichen Endabschnitte 53, 54 übergreifen. Somit ist durch das Eingreifen der seitlichen Führungsabschnitte des Mitnehmers 5 in die Führungskanäle K1, K2 lediglich eine Positionierung des Mitnehmers 5 entlang einer Raumrichtung +y parallel zur horizontalen Fahrzeugquerachse y gewährleistet. Die Positionierung in der entgegengesetzten Raumrichtung -y wird hierbei zusätzlich von dem mittleren Vorsprung 25 der Führungsschiene 2 übernommen, dessen freies Ende hierzu mit einer Bodenfläche der den mittleren Vorsprung 25 umgreifenden Ausnehmung 55 im Grundkörper 50 des Mitnehmers 5 zusammenwirkt.

Dabei können optional an den seitlichen Vorsprüngen 21, 22 auf der dem jeweiligen Führungskanal K1, K2 abgewandten Seite lokal einzelne Verstärkungsrippen 6 vorgesehen sein, um Verzugstendenzen auszuschließen.

Weiter können die Verbindungsbereiche 50a, 50b in Form von Armen, über die die seitlichen Führungsabschnitte 51, 52 des Mitnehmers 5 mit dessen Grundkörper 50 verbunden sind, federelastisch ausgebildet sein, um einen Toleranzausgleich entlang der horizontalen Fahrzeugquerachse y zu ermöglichen.

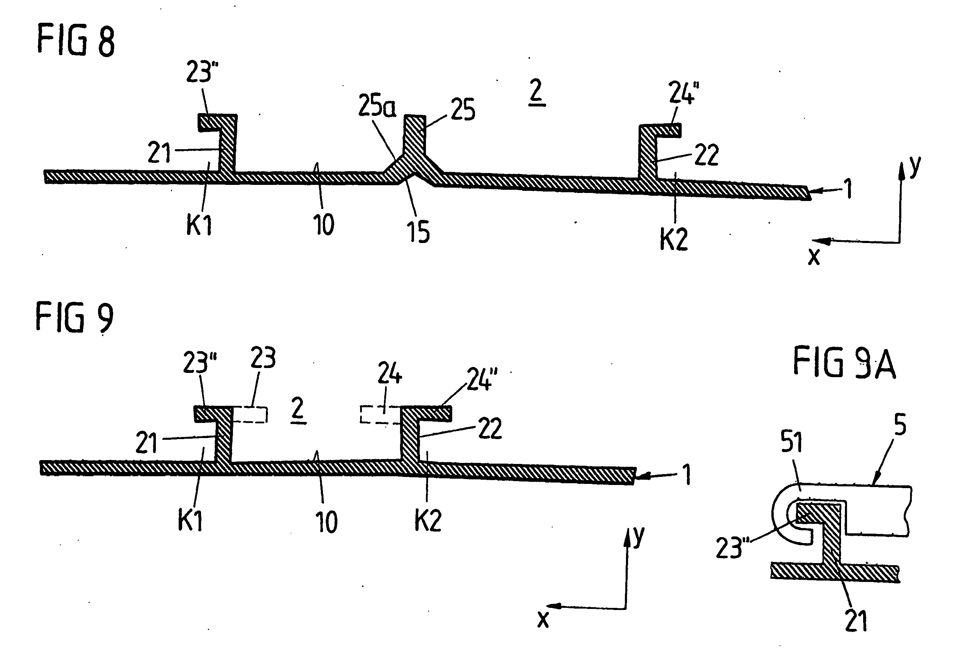

Das in Figur 8 dargestellte Ausführungsbeispiel einer Führungsschiene 2 unterscheidet sich von dem in Figur 6b gezeigten dadurch, dass die abgewinkelten Endabschnitte 23", 24" der die Führungskanäle K1, K2 bildenden Vorsprünge 21, 22 entlang einander abgewandter Richtungen weisen. Hierdurch sind die beiden Führungskanäle K1, K2 - vom mittleren Vorsprung 25 der Führungsschiene her betrachtet - jenseits der seitlichen Vorsprünge 21, 22 angeordnet. Dies bedingt eine entsprechende Gestaltung des Mitnehmers 5, so dass dieser wiederum mit seinen seitlichen Führungsabschnitten jene abgewinkelten Endabschnitte 23", 24" hintergreift.

Sofern der Mitnehmer 5 mit seinen beiden seitlichen Führungsabschnitten nicht nur die jeweils abgewinkelten Endabschnitte 23, 24 bzw. 23", 24" der seitlichen Vorsprünge 21, 22 hintergreift bzw. umgreift, sondern zusätzlich auch noch jene Vorsprünge 21, 22 selbst umgreift, kann auf den mittleren Vorsprung 25 zur Führung des Mitnehmers ganz verzichtet werden, wie in Figur 9 gezeigt. In diesem Fall übernehmen die Führungskanäle K1, K2 bzw. die Vorsprünge 21, 22 mit den abgewinkelten Endabschnitten 23, 24 oder 23", 24" die Positionierung des Mitnehmers 5 entlang sämtlicher Raumrichtungen x, y senkrecht zur Verstellrichtung z, also sowohl entlang der Fahrzeuglängsachse x als auch entlang der horizontalen Fahrzeugquerachse y, vergleiche Figur 9a mit dem beispielhaft dargestellten seitlichen Führungsabschnitt 51' des Mitnehmers 5.

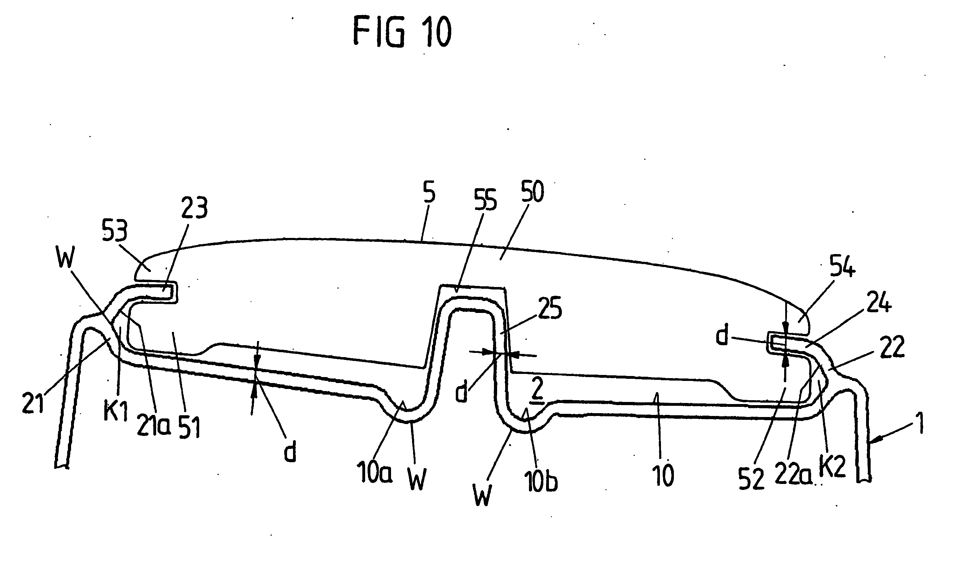

Figur 10 zeigt schließlich eine Weiterbildung der in Figur 6b dargestellten Führungsschiene, bei der sowohl in den beiden seitlichen Führungskanälen K1, K2 als auch am Übergang zwischen dem mittleren Vorsprung 25 der Führungsschiene 2 und dem Aggregateträger 1 jeweils Wölbungen 21a, 22a bzw. 10a, 10b ausgeformt sind. Diese dienen nicht der Führung des Mitnehmers 5, d. h., der Mitnehmer 5 greift nicht in diese Wölbungen 10a, 10b; 21 a, 22a ein, sondern sie dienen vielmehr einer Maximierung der Steifigkeit der am Aggregateträger 1 angeformten Führungsschiene 2 bei durchgängig konstanter Materialdicke d des Aggregateträgers 1 im Bereich der Führungsschiene 2 einschließlich deren Vorsprünge 21, 22, 25.

In Figur 11 sind drei Schieber S1, S2, S3 eines Spritzgusswerkzeugs dargestellt, von denen ein mittlerer Schieber S1 zur Formung des mittleren Vorsprungs 25 der in Figur 10 dargestellten Führungsschiene 2 dient und zwei weitere Schieber S2, S3 zur Formung der Führungskanäle K1, K2 der in Figur 10 dargestellten Führungsschiene 2 dienen, und zwar einschließlich der dort vorgesehenen Auswölbungen 10a, 10b; 21 a, 22a.

Zur Entformung des Spritzgusswerkzeugs wird gemäß den in Figur 11 gezeigten Ziffern zunächst der zur Formung des mittleren Vorsprungs 25 der Führungsschiene 2 dienende Schieber S1 senkrecht zur Erstreckungsebene des Aggregateträgers 1 von diesem weg bewegt. Anschließend werden die beiden der Formung der seitlichen Führungskanäle K1, K2 dienenden Schieber S2, S3 zunächst durch eine begrenzte Bewegung parallel zur Erstreckungsebene des Aggregateträgers 1 mit den Führungskanälen K1, K2 außer Eingriff gebracht und sodann durch eine Bewegung senkrecht zur Erstreckungsebene des Aggregateträgers 1 entfernt.

Figur 2 zeigt einen Querschnitt durch einen (von einem umlaufenden äußeren Rand 11 begrenzten) Aggregateträger 1 der in Figur 1a dargestellten Art im Bereich seines oberen Endes nach dem Einbau in eine Kraftfahrzeugtür, wie in Figur 6a gezeigt, jedoch in einer abgewandelten Ausführungsform.

Ein wesentlicher Unterschied besteht darin, dass gemäß Figur 2 eine Führungsschiene 102 vorgesehen ist, die nicht einstückig am Aggregateträger 1 angeformt ist, sondern als eine separate Funktionskomponente am Aggregateträger 1 festgelegt ist.

Hierzu ist am oberen Hohlkörper 3a, der am oberen Rand Aggregateträgers 1 angeformt ist und von diesem entlang der Erstreckungsrichtung E der Führungsschienen 102 absteht, ein Lagerzapfen 35 angeformt, der gleichzeitig zur drehbaren Lagerung eines Umlenkelementes 143 und zur Fixierung der Führungsschiene 102 dient. Der Lagerzapfen 35 durchgreift eine Lageröffnung 143b des Umlenkelementes 143 in Form einer Lagerrolle, die am äußeren Umfang eine Seilführung 143a für ein flexibles Zugmittel aufweist, und durchgreift außerdem eine mit der Lageröffnung 143b fluchtende Befestigungsöffnung der Führungsschiene 102. Das dem Aggregateträger 1 und dem hieran angeformten Hohlkörper 3a abgewandte freie Ende 36 des Lagerzapfens 35 wird nach dem Aufsetzen des Umlenkelementes 143 in Form einer Umlenkrolle und der Führungsschiene 102 plastisch deformiert, so dass es als Befestigungskopf 36' die Befestigungsöffnung der Führungsschiene 102 an ihrem Rand übergreift. Hierdurch ist die Führungsschiene 102 im Bereich ihres oberen Endes am Aggregateträger 1 bzw. genauer am dort angeformten Hohlkörper 3a fixiert. Gleichzeitig ist das Umlenkelement 143 in Form einer Umlenkrolle auf dem vom Hohlkörper 3a abstehenden Lagerzapfen 35 drehbar gelagert und wird hierbei von einem Abschnitt der Führungsschiene 102 übergriffen.

Anhand Figur 2 ist ferner erkennbar, dass der Aggregateträger 1 mit seinem abgewinkelten oberen Randabschnitt des umlaufenden Randes 11 über eine Dichtung D an der durch eine Brüstungsverstärkung B verstärkten Türinnenhaut I einer Kraftfahrzeugtür anliegt, so dass er den in der Türinnenhaut I vorgesehenen Ausschnitt A feuchtigkeitsdicht verschließen kann.

Weiterhin wird an Figur 2 deutlich, dass der Hohlkörper 3a entlang der Erstreckungsrichtung E der Führungsschiene 102, und somit der Verstellrichtung des Fensterhebers, über die Dichtung D hinausragt, über die der Aggregateträger 1 mit einem Randabschnitt seines umlaufenden Randes 11 feuchtigkeitsdicht an der Türinnenhaut I anliegt, wobei außerdem der Hohlkörper 3a entlang der (quer zur Türebene verlaufenden) vertikalen Fahrzeugquerachse y von dem mit der Dichtung D versehenen oberen Randabschnitt des Aggregateträgers 1 beabstandet ist. Dies bewirkt die bereits eingangs beschriebene Hublängenvergrößerung entlang der Verstellrichtung E, ohne dass die Nass-/Trockenraumtrennung beeinträchtigt würde, für die die feuchtigkeitsdichte Anlage des Aggregateträgers 1 an der Türinnenhaut I wesentlich ist.

Die Hublängenvergrößerung wird dabei in dem in Figur 2 gezeigten Ausführungsbeispiel nicht dadurch erreicht, dass am oberen Hohlkörper 3a Führungsflächen für einen auf der Führungsschiene 102 zu führenden Mitnehmer vorgesehen werden, sondern vielmehr dadurch, dass die - entlang der Verstellrichtung E betrachtet - obere Befestigungsstelle der Führungsschiene 102 sowie die Lagerstelle des Umlenkelementes 143 derart entlang der Verstellrichtung E nach oben hin versetzt sind - verglichen mit einem Aggregateträger ohne angeformten Hohlkörper -, dass die Führungsschiene 102 sowie das Umlenkelement 143 entlang der Verstellrichtung E über den mittels der Dichtung D an der Türinnenhaut I anliegenden oberen Randabschnitt 11 des Aggregateträgers 1 hinausragen.

Ferner bewirkt der als Hohlnase geformte, im Wesentlichen geschlossene Hohlkörper 3a, dessen Grundkörper 30 lediglich an seinem - in Verstellrichtung E - unteren Ende eine Öffnung 39 aufweist, deren Öffnungsquerschnitt im Wesentlichen senkrecht zu der durch den Aggregateträger 1 aufgespannten Fläche orientiert ist, eine Versteifung des Aggregateträgers 1 im Bereich der Anbindungspunkte der Führungsschiene 102 sowie der Umlenkrolle 143, wo im Betrieb des Fensterhebers entsprechend große Verstellkräfte wirken.

Wie eine Zusammenschau der Figur 2 mit der kompletten Darstellung eines Aggregateträgers 1 gemäß Figur 1 zeigt, erstreckt sich die Querschnittsfläche der Öffnung 39 - bezogen auf den in ein Kraftfahrzeug eingebauten Zustand des Aggregateträgers 1 - im Wesentlichen entlang der durch die Fahrzeuglängsachse x und die horizontale Fahrzeugquerachse y aufgespannten Ebene (xy-Ebene), während sich der Aggregateträger 1 im Wesentlichen entlang der durch die Fahrzeuglängsachse x und die vertikale Fahrzeugachse z aufgespannten Ebene (xz-Ebene) erstreckt. Die horizontale Fahrzeugquerachse y ist dabei dadurch charakterisiert, dass sie sich von einer Fahrzeugtür senkrecht zur Türebene zur unmittelbar gegenüberliegenden Fahrzeugtür erstreckt, also etwa von der Fahrertür zur Beifahrertür.

Ferner ist anhand einer Zusammenschau der Figuren 1a und 2 erkennbar, dass die Öffnung 39 des Hohlkörpers 3a dem mittleren Bereich ZB (zentralen Bereich) des Aggregateträgers 1 zugewandt ist. Unter dem mittleren Bereich ZB des Aggregateträgers 1 wird dabei derjenige Bereich verstanden, welcher entlang der vertikalen Fahrzeugachse z, also entlang einer vom unteren Rand zum oberen Rand des Aggregateträgers erstreckten Richtung, etwa in der Mitte des Aggregateträgers liegt. Mit anderen Worten ausgedrückt, weist die Öffnung 39 des gemäß Figur 2 an einem oberen Randabschnitt des äußeren Randes 11 des Aggregateträgers 1 gelegenen Hohlkörpers 3a in Richtung auf den gegenüberliegenden, unteren Randabschnitt des äußeren Randes 11 und somit auch auf den mittleren Bereich ZB des Aggregateträgers 1, der zwischen dem oberen und unteren Rand des Aggregateträgers 1 liegt.

Unter dem oberen und unteren Rand des Aggregateträgers 1 werden dabei diejenigen Randabschnitte des umlaufenden äußeren Randes 11 des Aggregateträgers 1 betrachtet, die den Aggregateträger - bezogen auf seinen in ein Kraftfahrzeug eingebauten Zustand - nach oben und nach unten begrenzen.

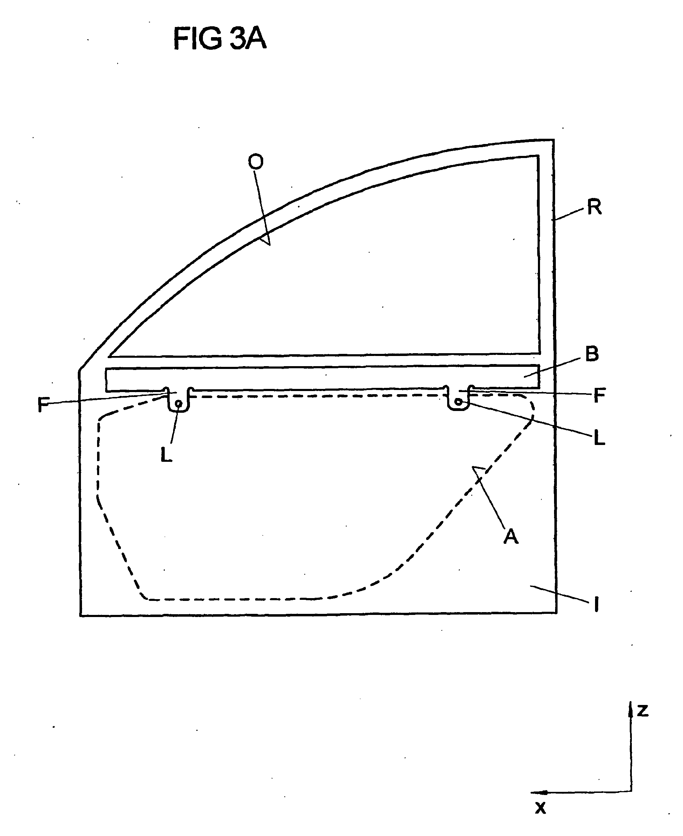

Figur 3a zeigt schematisch den Aufbau einer Türstruktur einer Kraftfahrzeugtür, in die ein Aggregateträger 1 der vorstehend beschriebenen Art einbaubar ist. Die Türstruktur umfasst eine mit einem großflächigen Ausschnitt A versehene Türinnenhaut I, die - entlang der vertikalen Fahrzeugachse z betrachtet - nach oben hin durch eine Brüstungsverstärkung B begrenzt ist. An diese schließt sich nach oben hin wiederum ein eine Fensteröffnung O definierender Fensterrahmen R an.

Von der Brüstungsverstärkung B stehen - entlang der vertikalen Fahrzeugachse z betrachtet - nach unten zungenartige Fortsätze F ab, die über den großflächigen Ausschnitt A der Türinnenhaut I ragen und dort mit Lagerstellen L in Form jeweils einer Lageröffnung versehen sind.

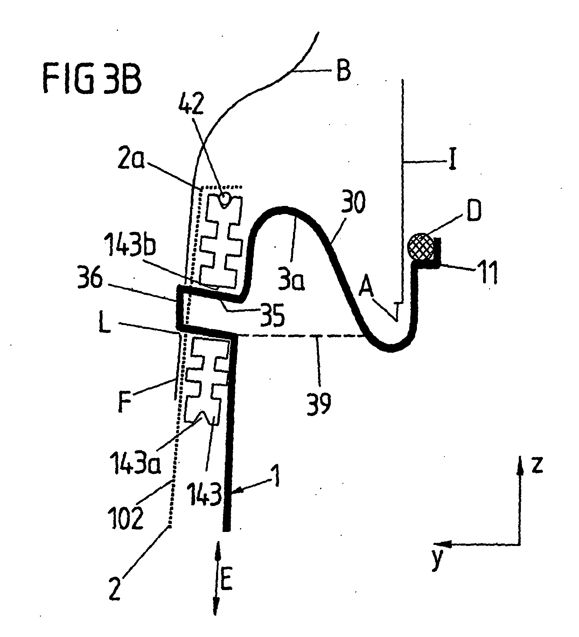

Figur 3b zeigt einen Querschnitt durch die Türstruktur aus Figur 3a im Bereich der Brüstungsverstärkung B zusammen mit einem in die Türstruktur eingebauten, den großflächigen Ausschnitt A der Türinnenhaut I überdeckenden Aggregateträger 1, an dem eine Führungsschiene 2 einstückig angeformt ist und der im Bereich des oberen Endabschnittes 2a der Führungsschiene 2 mit einem ebenfalls einstückig angeformten Hohlkörper 3a versehen ist. Der Aggregateträger 1 liegt an seinem oberen Randabschnitt 11 über eine Dichtung D an dem großflächigen Ausschnitt A umgebenden Rand der Türinnenhaut I an, wobei der am Aggregateträger bzw. am oberen Endabschnitt 2a der Führungsschiene 2 angeformte Hohlkörper 3a jenen Dichtungsbereich entlang der Verstellrichtung E des Fensterhebers und somit entlang der vertikalen Fahrzeugachse z überragt. Der Hohlkörper 3a erstreckt sich dabei - entlang der horizontalen Fahrzeugquerachse y betrachtet - zwischen der Türinnenhaut I und dem Fortsatz F der Brüstungsverstärkung B.

Vom Hohlkörper 3a steht wiederum ein Lagerzapfen 35 ab, auf den ein Umlenkelement 143 drehbar gelagert ist, welches zur Umlenkung eines flexiblen Zugmittels 42 eines Kraftfahrzeugfensterhebers dient, wobei der Lagerzapfen 35 außerdem mit seinem dem Hohlkörper 3a abgewandten freien Ende 36 eine Lageröffnung L in einem der von der Brüstungsverstärkung B nach unten abstehenden zungenartigen Fortsätze F eingreift. Hierdurch ist das Umlenkelement 143 in Form einer Umlenkrolle zwischen dem Hohlkörper 3a und dem zungenartigen Fortsatz F der Brüstungsverstärkung B aufgenommen, in dessen Lageröffnung L sich außerdem der einstückig am Hohlkörper 3a angeformte Lagerzapfen 35 abstützt, dessen freies Ende 36 gegebenenfalls, wie in Figur 1c gezeigt, umgeformt sein kann.

Aufgrund der insgesamt zwei gemäß Figur 3a von der Brüstungsverstärkung B nach unten abstehenden zungenartigen Fortsätze F eignet sich die dort dargestellte Türstruktur zur Aufnahme eines Aggregateträgers mit einem doppelsträngigen Fensterheber, also mit einem Fensterheber, der zwei nebeneinander angeordnete, entlang der Fahrzeuglängsachse x voneinander beabstandete, sich jeweils im Wesentlichen entlang der vertikalen Fahrzeugachse z erstreckende Führungsschienen aufweist.

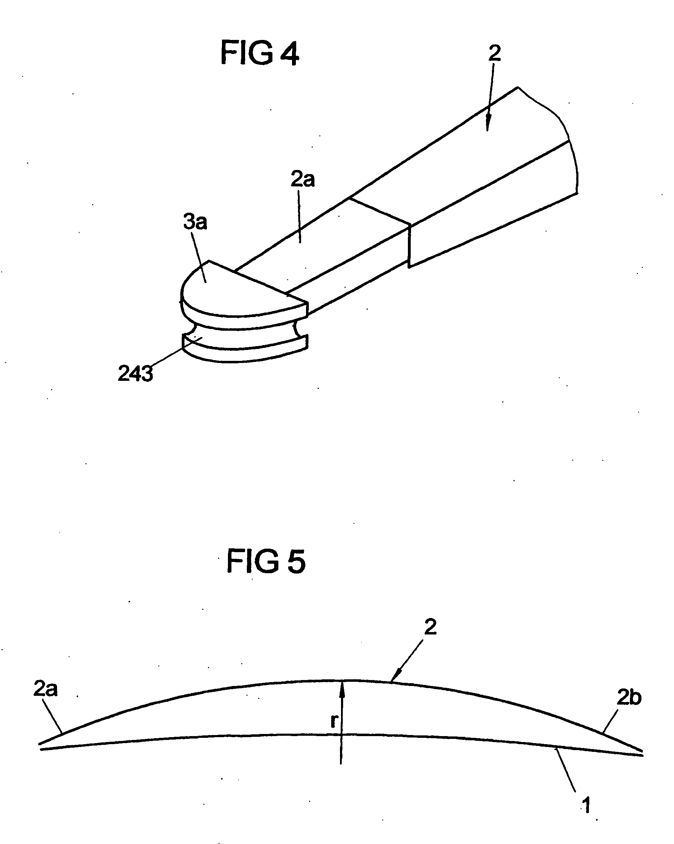

Figur 4 zeigt eine Führungsschiene 2 für einen Kraftfahrzeugfensterheber, die in der vorstehend anhand der Figuren 1a bis 1c beschriebenen Weise einstückig an einem Aggregateträger 1 einer Kraftfahrzeugtür angeformt sein kann und an deren oberem Endabschnitt 2a ein Hohlkörper 3a angeformt ist, an dem wiederum einstückig ein Umlenkbereich 243 für ein flexibles Zugmittel eines Fensterhebers ausgeformt ist.

Figur 5 zeigt schließlich einen Aggregateträger 1 zusammen mit einer hieran angeformten gekrümmten Führungsschiene 2, deren Krümmungsradius r sich im Wesentlichen senkrecht zu der von dem Aggregateträger 1 aufgespannten Grundfläche (z. B. in Form einer Ebene) erstreckt. Durch die Befestigung der Führungsschiene 2 am Aggregateträger 1 im Bereich seiner beiden Endabschnitte 2a, 2b wird nach einem "Brückeneffekt" eine zusätzliche Versteifung der Anordnung erreicht.

## Patentansprüche

1. Aggregateträger für eine Kraftfahrzeugtür, der zum Einbau in eine Kraftfahrzeugtür ausgebildet und vorgesehen ist und der im eingebauten Zustand zumindest einen Teil einer Türinnenhaut der Türstruktur bildet, mit mindestens einer an dem Aggregateträger angeordneten, längserstreckten Führungsschiene eines Kraftfahrzeugfensterhebers, die sich zwischen einem ersten und einem zweiten Endabschnitt erstreckt und auf der ein zur Mitnahme einer zu verstellenden Fensterscheibe dienender Mitnehmer entlang einer durch Führungsflächen definierten Verstellbahn der Führungsschiene beweglich geführt ist,
**dadurch gekennzeichnet,**
**dass** am Aggregateträger (1) im Bereich mindestens eines Endabschnittes (2a, 2b) der Führungsschiene (2) einstückig ein Hohlkörper (3a, 3b) angeformt ist, der
a) die zur Führung des Mitnehmers (5) dienenden, die Verstellbahn definierenden Führungsflächen der Führungsschiene (2) fortsetzt und/oder
b) an dem ein Umlenkelement (43, 143, 243) zur Umlenkung eines flexiblen Zugmittels (42) des Fensterhebers vorgesehen ist,
um die Hublänge des Kraftfahrzeugfensterhebers in Erstreckungsrichtung (E) der Führungsschiene (2) zu verlängern.

2. Aggregateträger nach Anspruch 1, **dadurch gekennzeichnet, dass** der Hohlkörper (3a, 3b) als ein einseitig offner, im übrigen allseitig geschlossener Hohlkörper ausgebildet ist.

3. Aggregateträger nach Anspruch 1 oder 2, **dadurch gekennzeichnet, dass** der Hohlkörper (3a, 3b) lediglich an einer Stirnseite eine Öffnung (39) aufweist.

4. Aggregateträger nach Anspruch 2 oder 3, **dadurch gekennzeichnet, dass** die Querschnittsfläche der Öffnung (39) sich im Wesentlichen quer zu der Ebene erstreckt, die durch den Aggregateträger (1) aufgespannt wird.

5. Aggregateträger nach Anspruch 2 bis 4, **dadurch gekennzeichnet, dass** die Öffnung (39) dem zentralen Bereich (ZB) des Aggregateträgers (1) zugewandt ist.

6. Aggregateträger nach einem der vorhergehenden Ansprüche, **dadurch gekennzeichnet, dass** sich der Hohlkörper (3a, 3b) in Erstreckungsrichtung (E) der Führungsschiene (2) erstreckt.

7. Aggregateträger nach einem der vorhergehenden Ansprüche, **dadurch gekennzeichnet, dass** der Hohlkörper (3a, 3b) die die Verstellbahn der Führungsschiene (2) definierenden Führungsfläche in Erstreckungsrichtung (E) der Führungsschiene (2) fortsetzt.

8. Aggregateträger nach einem der vorhergehenden Ansprüche, **dadurch gekennzeichnet, dass** der Hohlkörper (3a, 3b) über einen Endabschnitt (2a, 2b) der Führungsschiene (2) hinausragt.

9. Aggregateträger nach einem der vorhergehenden Ansprüche, **dadurch gekennzeichnet**, sich der Hohlkörper (3a, 3b) entlang der Erstreckungsrichtung (E) der Führungsschiene (2) verjüngt.

10. Aggregateträger nach Anspruch 9, **dadurch gekennzeichnet, dass** sich der Hohlkörper (3a, 3b) weg von dem zugeordneten Endabschnitt (2a, 2b) der Führungsschiene (2) verjüngt.

11. Aggregateträger nach einem der vorhergehenden Ansprüche, **dadurch gekennzeichnet, dass** die Führungsschiene (102) als separate Baueinheit am Aggregateträger (1) befestigt ist.

12. Aggregateträger nach einem der Ansprüche 1 bis 10, **dadurch gekennzeichnet, dass** die Führungsschiene (2) einstückig am Aggregateträger (1) angeformt ist.

13. Aggregateträger nach Anspruch 12, **dadurch gekennzeichnet, dass** der Hohlkörper (3a, 3b) an der Führungsschiene (2) angeformt ist.

14. Aggregateträger nach Anspruch 13, **dadurch gekennzeichnet, dass** der Hohlkörper (3a, 3b) als eine einstückig angeformte Fortsetzung eines Endabschnittes (2a, 2b) der Führungsschiene (2) ausgebildet ist.

15. Aggregateträger nach einem der vorhergehenden Ansprüche, **dadurch gekennzeichnet, dass** der Hohlkörper (3a, 3b) Führungsflächen (32) für den an der Führungsschiene (2, 102) geführten Mitnehmer (5) aufweist.

16. Aggregateträger nach Anspruch 15, **dadurch gekennzeichnet, dass** die am Hohlkörper (3a, 3b) ausgebildeten Führungsflächen (32) zumindest einen Teil der an der Führungsschiene (2) vorgesehenen, die Verstellbahn definierenden Führungsflächen über den zugeordneten Endabschnitt (2a, 2b) der Führungsschiene (2) hinaus fortsetzen.

17. Aggregateträger nach einem der vorhergehenden Ansprüche, **dadurch gekennzeichnet, dass** an dem Hohlkörper (3a, 3b) ein Umlenkelement (43, 143, 243) vorgesehen ist, mit dem ein flexibles Zugmittel (42) des Kraftfahrzeugfensterhebers derart umgelenkt wird, dass es sich mit einem Teilabschnitt entlang der Führungsschiene (2) erstreckt.

18. Aggregateträger nach einem der vorhergehenden Ansprüche, **dadurch gekennzeichnet, dass** das Umlenkelement (243) einstückig am Hohlkörper (3a, 3b) angeformt ist.

19. Aggregateträger nach einem der Ansprüche 1 bis 17, **dadurch gekennzeichnet, dass** das Umlenkelement (43, 143) als separate Baugruppe am Hohlkörper (3a, 3b) angeordnet ist.

20. Aggregateträger nach einem der vorhergehenden Ansprüche, **dadurch gekennzeichnet, dass** das Umlenkelement (143) als Umlenkrolle drehbar am Hohlkörper (3a, 3b) gelagert ist.

21. Aggregateträger nach Anspruch 19 oder 20, **dadurch gekennzeichnet, dass** das Umlenkelement (143) auf einem vom Hohlkörper (3a, 3b) abstehenden Lagerzapfen (35) gelagert ist.

22. Aggregateträger nach Anspruch 21, **dadurch gekennzeichnet, dass** der Lagerzapfen (35) an einer Stirnseite (36) eine Verbreiterung (36') aufweist, die das Umlenkelement (143) zumindest teilweise übergreift.

23. Aggregateträger nach Anspruch 22, **dadurch gekennzeichnet, dass** die Verbreiterung (36') durch plastische Deformation des Lagerzapfens (35) gebildet ist.

24. Aggregateträger nach einem der vorhergehenden Ansprüche, **dadurch gekennzeichnet, dass** der Aggregateträger (1) von einem umlaufenden äußeren Rand (11) begrenzt ist, über den er im eingebauten Zustand an mindestens einer Baugruppe (I) der Türstruktur anliegt, und dass der Hohlkörper (3a, 3b) entlang der Erstreckungsrichtung (E) der Führungsschiene (2) über einen Abschnitt des umlaufenden Randes (11) des Aggregateträgers (1) hinausragt.

25. Aggregateträger nach einem der vorhergehenden Ansprüche, **dadurch gekennzeichnet, dass** der Hohlkörper (3a, 3b) entlang der Erstreckungsrichtung (E) der Führungsschiene (2) über eine Dichtung (D) hinausragt, über die der Aggregateträger (1) im eingebauten Zustand an mindestens einer Baugruppe (I) der Türstruktur anliegt.

26. Aggregateträger nach einem der vorhergehenden Ansprüche, **dadurch gekennzeichnet, dass** jedem der beiden Endabschnitte (2a, 2b) der Führungsschiene (2) jeweils ein am Aggregateträger (1) angeformter Hohlkörper (3a, 3b) zugeordnet ist.

27. Aggregateträger nach einem der vorhergehenden Ansprüche, **dadurch gekennzeichnet, dass** das am Hohlkörper (3a, 3b) angeordnete Umlenkelement (243) im eingebauten Zustand des Aggregateträgers (1) von einem Fortsatz (F) einer Brüstungsverstärkung (B) der Türstruktur übergriffen wird.

28. Aggregateträger nach einem der vorhergehenden Ansprüche, **dadurch gekennzeichnet, dass** der Hohlkörper (3a, 3b) einen Hohlraum umschließt und lediglich an einer Stirnseite eine Öffnung (39) aufweist, deren Öffnungsquerschnitt im Wesentlichen senkrecht zu der durch den Aggregateträger (1) aufgespannten Fläche orientiert ist.

29. Aggregateträger nach Anspruch 12 oder einem der Ansprüche 13 bis 28, soweit rückbezogen auf Anspruch 12, **dadurch gekennzeichnet, dass** die einstückig am Aggregateträger (1) angeformte Führungsschiene (2) mindestens zwei Führungskanäle (K1, K2) umfasst, die quer zu der durch die Verstellbahn definierten Verstellrichtung (z) des Mitnehmers (5) voneinander beabstandet sind und in denen jeweils ein Führungsabschnitt (51, 53; 52, 54) des Mitnehmers (5) geführt ist.

30. Aggregateträger nach Anspruch 29, **dadurch gekennzeichnet, dass** der jeweilige Führungskanal (K1, K2) gebildet ist durch einen von einer Oberfläche (10) des Aggregateträgers (1) abstehenden Vorsprung (21, 22), der zusammen mit der Oberfläche (10) des Aggregateträgers (1) eine kanalartige Führung für jeweils einen Führungsabschnitt des Mitnehmers (5) definiert.

31. Aggregateträger nach Anspruch 30, **dadurch gekennzeichnet, dass** der jeweilige Vorsprung (21, 22) einen abgewinkelten Abschnitt (23, 24; 23', 24'; 23", 24") aufweist, der einen Führungsabschnitt (51, 53; 52, 54) des Mitnehmers (5) übergreift.

32. Aggregateträger nach Anspruch 31, **dadurch gekennzeichnet, dass** der jeweilige Führungsabschnitt (51, 53; 52, 54) des Mitnehmers (5) einen abgewinkelten Abschnitt (23, 24; 23', 24'; 23", 24") umgreift.

33. Aggregateträger nach einem der Ansprüche 29 bis 32, **dadurch gekennzeichnet, dass** die abgewinkelten Abschnitte (23, 24; 23', 24'; 23", 24") in unterschiedlichen Richtungen weisen.

34. Aggregateträger nach Anspruch 33, **dadurch gekennzeichnet, dass** die beiden abgewinkelten Abschnitte (23, 24; 23', 24'; 23", 24") aufeinander zu gerichtet sind.

35. Aggregateträger nach Anspruch 33, **dadurch gekennzeichnet, dass** die beiden abgewinkelten Abschnitte (23, 24; 23', 24'; 23", 24") voneinander weg gerichtet sind.

36. Aggregateträger nach einem der Ansprüche 31 bis 35, **dadurch gekennzeichnet, dass** die abgewinkelten Abschnitte (23', 24') jeweils geneigt zur Oberfläche (10) des Aggregateträgers (1) verlaufen, an der die den abgewinkelten Abschnitten (23', 24') zugeordneten Vorsprünge (21, 22) angeformt sind.

37. Aggregateträger nach Anspruch 36, **dadurch gekennzeichnet, dass** die abgewinkelten Abschnitte (23', 24') derart geneigt verlaufen, dass sie mit ihren freien Enden von der Oberfläche (10) des Aggregateträgers (1) wegweisen.

38. Aggregateträger nach einem der Ansprüche 29 bis 37, **dadurch gekennzeichnet, dass** am Aggregateträger zusätzlich zu den mindestens zwei Führungskanälen (K1, K2) ein weiterer Führungsbereich (25) als Bestandteil der Führungsschiene (2) angeformt ist.

39. Aggregateträger nach einem der Ansprüche 29 bis 38, **dadurch gekennzeichnet, dass** der zusätzliche Führungsbereich (25) zwischen den beiden Führungskanälen (K1, K2) verläuft.

40. Aggregateträger nach Anspruch 39, **dadurch gekennzeichnet, dass** der zusätzliche Führungsbereich (25) entlang der Verstellbahn verläuft und quer zu der Verstellbahn betrachtet von den beiden Führungskanälen (K1, K2) beabstandet ist.

41. Aggregateträger nach einem der Ansprüche 38 bis 40, **dadurch gekennzeichnet, dass** der zusätzliche Führungsbereich (25) gebildet ist durch einen von einer Oberfläche (10) des Aggregateträgers (1) abstehenden Vorsprung.

42. Aggregateträger nach Anspruch 41, **dadurch gekennzeichnet, dass** der zusätzliche Führungsbereich (25) keinen abgewinkelten Abschnitt aufweist.

43. Aggregateträger nach einem der Ansprüche 29 bis 42, **dadurch gekennzeichnet, dass** der Aggregateträger (1) in dem Bereich, in dem die Führungsschiene (2) angeformt ist, Sicken (15) und/oder Wölbungen (10a, 10b; 21 a, 22a) aufweist.

44. Aggregateträger nach Anspruch 43, **dadurch gekennzeichnet, dass** die Sicken (15) und/oder Wölbungen (10a, 10b; 21a, 22a) von dem an der Führungsschiene (2) geführten Mitnehmer (5) beabstandet sind, so dass sie keine Führungsfläche für den Mitnehmer (5) bilden.

45. Aggregateträger nach einem der vorhergehenden Ansprüche, **dadurch gekennzeichnet, dass** der Hohlkörper (3a, 3b) als Hohlnase ausgebildet ist

46. Aggregateträger nach einem der vorhergehenden Ansprüche, **dadurch gekennzeichnet, dass** der Aggregateträger (1) aus Kunststoff besteht.

47. Aggregateträger nach einem der vorhergehenden Ansprüche, **dadurch gekennzeichnet, dass** der Aggregateträger (1) im Bereich der Führungsschiene (2) eine konstante Materialdicke (d) aufweist.

48. Aggregateträger nach einem der vorhergehenden Ansprüche, **dadurch gekennzeichnet, dass** am Aggregateträger (1) zwei nebeneinander angeordnete, quer zu ihrer jeweiligen Erstreckungsrichtung voneinander beabstandete Führungsschienen (2) angeordnet sind, die sich jeweils zwischen einem ersten und einem zweiten Endabschnitt (2a, 2b) erstrecken, wobei im Bereich mindestens eines Endabschnittes (2a, 2b) der Führungsschienen (2) am Aggregateträger (1) einstückig ein Hohlkörper (3a, 3b) angeformt ist, der entlang der Erstreckungsrichtung (E) der Führungsschiene (2) über einen Endabschnitt (2a, 2b) der Führungsschiene (2) hinausragt.

## Claims

1. A unit support for a motor vehicle door, which is configured and provided for installation in a motor vehicle door and which in the installed state forms at least one part of a door inner skin of the door structure, comprising at least one longitudinally extended guide rail of a motor vehicle window lifter arranged on the unit support, which extends between a first and a second end portion and on which a drive element serving to receive a window pane to be adjusted along an adjusting path of the guide rail defined by guide surfaces is movably guided,
**characterized in that**
a hollow body (3a, 3b) is integrally formed on the unit support (1) in the region of at least one end portion (2a, 2b) of the guide rail (2), and which
a) extends the guide surfaces of the guide rail (2) serving to guide the drive element (5), defining the adjusting path and/or
b) on which a deflection element (43, 143, 243) is provided for deflecting a flexible traction means (42) of the window lifter,
in order to increase the length of travel of the motor vehicle window lifter in the direction of extension (E) of the guide rail (2).

2. The unit support as claimed in claim 1, **characterized in that** the hollow body (3a, 3b) is configured as a hollow body open on one side, but closed on all remaining sides.

3. The unit support as claimed in claim 1 or 2, **characterized in that** the hollow body (3a, 3b) has only one opening (39) on a front face.

4. The unit support as claimed in claim 2 or 3, **characterized in that** the cross-sectional area of the opening (39) extends substantially transversely to the plane which is spanned by the unit support (1).

5. The unit support as claimed in claim 2 to 4, **characterized in that** the opening (39) faces the central region (ZB) of the unit support (1).

6. The unit support as claimed in one of the preceding claims, **characterized in that** the hollow body (3a, 3b) extends in the direction of extension (E) of the guide rail (2).

7. The unit support as claimed in one of the preceding claims, **characterized in that** the hollow body (3a, 3b) extends the adjusting path of the guide surface defining the guide rail (2) in the direction of extension (E) of the guide rail (2).

8. The unit support as claimed in one of the preceding claims, **characterized in that** the hollow body (3a, 3b) projects over an end portion (2a, 2b) of the guide rail (2).

9. The unit support as claimed in one of the preceding claims, **characterized in that** the hollow body (3a, 3b) tapers in the direction of extension (E) of the guide rail (2).

10. The unit support as claimed in claim 9, **characterized in that** the hollow body (3a, 3b) tapers away from the associated end portion (2a, 2b) of the guide rail (2).

11. The unit support as claimed in one of the preceding claims, **characterized in that** the guide rail (102) is fastened as a separate component to the unit support (1).

12. The unit support as claimed in one of claims 1 to 10, **characterized in that** the guide rail (2) is integrally formed on the unit support (1).

13. The unit support as claimed in claim 12, **characterized in that** the hollow body (3a, 3b) is formed on the guide rail (2).

14. The unit support as claimed in claim 13, **characterized in that** the hollow body (3a, 3b) is configured as an integrally formed extension of an end portion (2a, 2b) of the guide rail (2).

15. The unit support as claimed in one of the preceding claims, **characterized in that** the hollow body (3a, 3b) comprises guide surfaces (32) for the drive element (5) guided on the guide rail (2, 102).

16. The unit support as claimed in claim 15, **characterized in that** the guide surfaces (32) configured on the hollow body (3a, 3b) extend at least one part of the guide surfaces provided on the guide rail (2) and defining the adjusting path, beyond the associated end portion (2a, 2b) of the guide rail (2).

17. The unit support as claimed in one of the preceding claims, **characterized in that** on the hollow body (3a, 3b) a deflection element (43, 143, 243) is provided by means of which a flexible traction means (42) of the motor vehicle window lifter is deflected such that it is extended by a partial portion along the guide rail (2).

18. The unit support as claimed in one of the preceding claims, **characterized in that** the deflection element (243) is formed integrally on the hollow body (3a, 3b).

19. The unit support as claimed in one of claims 1 to 17, **characterized in that** the deflection element (43, 143) is arranged as a separate subassembly on the hollow body (3a, 3b).

20. The unit support as claimed in one of the preceding claims, **characterized in that** the deflection element (143) is rotatably mounted as a deflection roller on the hollow body (3a, 3b).

21. The unit support as claimed in claim 19 or 20, **characterized in that** the deflection element (143) is mounted on a bearing pin (35) projecting from the hollow body (3a, 3b).

22. The unit support as claimed in claim 21, **characterized in that** the bearing pin (35) comprises a widening (36') on a front face (36), which at least partially overlaps the deflection element (143).

23. The unit support as claimed in claim 22, **characterized in that** the widening (36') is formed by plastic deformation of the bearing pin (35).

24. The unit support as claimed in one of the preceding claims, **characterized in that** the unit support (1) is defined by a peripheral outer edge (11) via which it bears against at least one subassembly (I) of the door structure in the installed state, and **in that** the hollow body (3a, 3b) projects in the direction of extension (E) of the guide rail (2) over a portion of the peripheral edge (11) of the unit support (1).

25. The unit support as claimed in one of the preceding claims, **characterized in that** the hollow body (3a, 3b) projects in the direction of extension (E) of the guide rail (2) over a seal (D), via which the unit support (1) in the installed state bears against at least one subassembly (I) of the door structure.

26. The unit support as claimed in one of the preceding claims, **characterized in that** one respective hollow body (3a, 3b) formed on the unit support (1) is associated with each of the two end portions (2a, 2b) of the guide rail (2).

27. The unit support as claimed in one of the preceding claims, **characterized in that** the deflection element (243) arranged on the hollow body (3a, 3b) in the installed state of the unit support (1) is overlapped by an extension (F) of a window sill reinforcement (B) of the door structure.

28. The unit support as claimed in one of the preceding claims, **characterized in that** the hollow body (3a, 3b) encloses a hollow space and comprises merely one opening (39) on a front face, the opening cross section thereof being oriented substantially perpendicular to the surface spanned by the unit support (1).

29. The unit support as claimed in claim 12 or one of claims 13 to 28, referring back to claim 12, **characterized in that** the guide rail (2) formed integrally on the unit support (1) comprises at least two guide channels (K1, K2), which are spaced apart from one another transversely to the direction of adjustment (z) of the drive element (5) defined by the adjusting path, and in which one respective guide portion (51, 53; 52, 54) of the drive element (5) is guided.

30. The unit support as claimed in claim 29, **characterized in that** the respective guide channel (K1, K2) is formed by a projection (21, 22) projecting from a surface (10) of the unit support (1) which, together with the surface (10) of the unit support (1), defines a channel-like guide for one respective guide portion of the drive element (5).

31. The unit support as claimed in claim 30, **characterized in that** the respective projection (21, 22) comprises an angled portion (23, 24; 23', 24'; 23", 24") which overlaps a guide portion (51, 53; 52, 54) of the drive element (5).

32. The unit support as claimed in claim 31, **characterized in that** the respective guide portion (51, 53; 52, 54) of the drive element (5) encompasses an angled portion (23, 24; 23', 24'; 23", 24").

33. The unit support as claimed in one of claims 29 to 32, **characterized in that** the angled portions (23, 24; 23', 24'; 23", 24") face in different directions.

34. The unit support as claimed in claim 33, **characterized in that** the two angled portions (23, 24; 23', 24'; 23", 24") are oriented toward one another.

35. The unit support as claimed in claim 33, **characterized in that** the two angled portions (23, 24; 23', 24'; 23", 24") are oriented away from one another.

36. The unit support as claimed in one of claims 31 to 35, **characterized in that** the angled portions (23', 24') extend respectively at an angle from the surface (10) of the unit support (1) on which the projections (21, 22) associated with the angled portions (23', 24') are formed.

37. The unit support as claimed in claim 36, **characterized in that** the angled portions (23', 24') extend at an angle such that they face away from the surface (10) of the unit support (1) with their free ends.

38. The unit support as claimed in one of claims 29 to 37, **characterized in that** on the unit support, additionally to the at least two guide channels (K1, K2), a further guide region (25) is formed as a component of the guide rail (2).

39. The unit support as claimed in one of claims 29 to 38, **characterized in that** the additional guide region (25) extends between the two guide channels (K1, K2).

40. The unit support as claimed in claim 39, **characterized in that** the additional guide region (25) extends along the adjusting path and, viewed transversely to the adjusting path, is spaced apart from the two guide channels (K1, K2).

41. The unit support as claimed in one of claims 38 to 40, **characterized in that** the additional guide region (25) is formed by a projection projecting from a surface (10) of the unit support (1).

42. The unit support as claimed in claim 41, **characterized in that** the additional guide region (25) does not have an angled portion.

43. The unit support as claimed in one of claims 29 to 42, **characterized in that** the unit support (1) in the region in which the guide rail (2) is formed comprises beads (15) and/or bulged portions (10a, 10b; 21a, 22a).

44. The unit support as claimed in claim 43, **characterized in that** the beads (15) and/or bulged portions (10a, 10b; 21a, 22a) are spaced apart from the drive element (5) guided on the guide rail (2), so that they do not form a guide surface for the drive element (5).

45. The unit support as claimed in one of the preceding claims, **characterized in that** the hollow body (3a, 3b) is configured as a hollow nose.

46. The unit support as claimed in one of the preceding claims, **characterized in that** the unit support (1) consists of plastics.

47. The unit support as claimed in one of the preceding claims, **characterized in that** the unit support (1) in the region of the guide rail (2) has a uniform material thickness (d).

48. The unit support as claimed in one of the preceding claims, **characterized in that** on the unit support (1) two guide rails (2) are arranged adjacent to one another and spaced apart from one another transversely to their respective direction of extension, and which respectively extend between a first and a second end portion (2a, 2b), in the region of at least one end portion (2a, 2b) of the guide rails (2) on the unit support (1) a hollow body (3a, 3b) being integrally formed which projects in the direction of extension (E) of the guide rail (2) over an end portion (2a, 2b) of the guide rail (2).

## Revendications

1. Support d'organe pour une porte de véhicule automobile, qui est réalisé et prévu pour l'intégration dans une porte de véhicule automobile et qui, dans l'état intégré, forme au moins une partie d'une peau intérieure de la structure de porte, comprenant au moins un rail de guidage d'un lève-vitre de véhicule, allongé, agencé sur le support d'organe, rail qui s'étend entre un premier et un deuxième tronçon d'extrémité et sur lequel est guidé en déplacement, le long d'une trajectoire de déplacement du rail de guidage définie par des surfaces de guidage, un élément d'entraînement servant à entraîner une vitre de fenêtre qu'il s'agit de déplacer,
**caractérisé en ce que**
un corps creux (3a, 3b) est conformé d'une seule pièce sur le support d'organe (1) dans la région d'au moins un tronçon d'extrémité (2a, 2b) du rail de guidage (2), ledit corps creux
a) prolongeant les surfaces de guidage du rail de guidage (2) qui définissent la trajectoire de déplacement et qui servent au guidage de l'élément d'entraînement (5), et/ou
b) étant pourvu d'un élément de renvoi (43, 143, 243) pour faire dévier un organe de traction flexible (42) du lève-vitre,
afin de prolonger la longueur de la course du lève-vitre dans la direction d'extension (E) du rail de guidage (2).

2. Support d'organe selon la revendication 1, **caractérisé en ce que** le corps creux (3a, 3b) est réalisé sous la forme d'un corps creux ouvert sur un côté et par ailleurs fermé sur tous les autres côtés.

3. Support d'organe selon la revendication 1 ou 2, **caractérisé en ce que** le corps creux (3a, 3b) comporte une ouverture (39) uniquement sur une face frontale.

4. Support d'organe selon la revendication 2 ou 3, **caractérisé en ce que** l'aire de section de l'ouverture (39) s'étend sensiblement transversalement au plan qui est défini par le support d'organe (1).

5. Support d'organe selon les revendications 2 à 4, **caractérisé en ce que** l'ouverture (39) est tournée vers la région centrale (ZB) du support d'organe (1).

6. Support d'organe selon l'une des revendications précédentes, **caractérisé en ce que** le corps creux (3a, 3b) s'étend dans la direction d'extension (E) du rail de guidage (2).

7. Support d'organe selon l'une des revendications précédentes, **caractérisé en ce que** le corps creux (3a, 3b) prolonge la surface de guidage, qui définit la trajectoire de déplacement du rail de guidage (2), dans la direction d'extension (E) du rail de guidage (2).

8. Support d'organe selon l'une des revendications précédentes, **caractérisé en ce que** le corps creux (3a, 3b) dépasse au-delà d'un tronçon d'extrémité (2a, 2b) du rail de guidage (2).

9. Support d'organe selon l'une des revendications précédentes, **caractérisé en ce que** le corps creux (3a, 3b) va en se rétrécissant le long de la direction d'extension (E) du rail de guidage (2).

10. Support d'organe selon la revendication 9, **caractérisé en ce que** le corps creux (3a, 3b) va en se rétrécissant en s'éloignant du tronçon d'extrémité associé (2a, 2b) du rail de guidage (2).

11. Support d'organe selon l'une des revendications précédentes, **caractérisé en ce que** le rail de guidage (102) est fixé sur le support d'organe (1) comme une unité structurelle séparée.

12. Support d'organe selon l'une des revendications 1 à 10, **caractérisé en ce que** le rail de guidage (2) est conformé d'une seule pièce sur le support d'organe (1).

13. Support d'organe selon la revendication 12, **caractérisé en ce que** le corps creux (3a, 3b) est conformé sur le rail de guidage (2).

14. Support d'organe selon la revendication 13, **caractérisé en ce que** le corps creux (3a, 3b) est réalisé comme un prolongement, conformé d'une seule pièce, d'un tronçon d'extrémité (2a, 2b) du rail de guidage (2).

15. Support d'organe selon l'une des revendications précédentes, **caractérisé en ce que** le corps creux (3a, 3b) comprend des surfaces de guidage (32) pour l'élément d'entraînement (5) guidé sur le rail de guidage (2, 102).

16. Support d'organe selon la revendication 15, **caractérisé en ce que** les surfaces de guidage (22) ménagées sur le corps creux (3a, 3b) prolongent au moins une partie des surfaces de guidage prévues sur le rail de guidage (2) et définissant la trajectoire de déplacement, au-delà du tronçon d'extrémité associé (2a, 2b) du rail de guidage (2).

17. Support d'organe selon l'une des revendications précédentes, **caractérisé en ce qu'**un élément de renvoi (43, 143, 243) est prévu sur le corps creux (3a, 3b), au moyen duquel un organe de traction flexible (42) du lève-vitre de véhicule est défléchi de telle manière qu'il s'étend par un tronçon partiel le long du rail de guidage (2).

18. Support d'organe selon l'une des revendications précédentes, **caractérisé en ce que** l'élément de renvoi (243) est conformé d'une seule pièce sur le corps creux (3a, 3b).

19. Support d'organe selon l'une des revendications 1 à 17, **caractérisé en ce que** l'élément de renvoi (43, 143) est agencé sur le corps creux (3a, 3b) comme un groupe structurel séparé.

20. Support d'organe selon l'une des revendications précédentes, **caractérisé en ce que** l'élément de renvoi (143) est monté, sous forme de galet de renvoi, en rotation sur le corps creux (3a, 3b).

21. Support d'organe selon la revendication 19 ou 20, **caractérisé en ce que** l'élément de renvoi (143) est monté sur un tenon de palier (35) qui dépasse du corps creux (3a, 3b).

22. Support d'organe selon la revendication 21, **caractérisé en ce que** le tenon de palier (35) comporte, sur une face frontale (36), un élargissement (36') qui coiffe au moins partiellement l'élément de renvoi (143).

23. Support d'organe selon la revendication 22, **caractérisé en ce que** l'élargissement (36') est formé par déformation plastique du tenon de palier (35).

24. Support d'organe selon l'une des revendications précédentes, **caractérisé en ce que** le support d'organe (1) est limité par une bordure extérieure périphérique (11) par laquelle il repose, dans l'état intégré, sur au moins un groupe structurel (I) de la structure de porte, et **en ce que** le corps creux (3a, 3b) s'étend, le long de la direction d'extension (E) du rail de guidage (2), au-delà d'un tronçon de la bordure périphérique (11) du support d'organe (1).

25. Support d'organe selon l'une des revendications précédentes, **caractérisé en ce que** le corps creux (3a, 3b) dépasse le long de la direction d'extension (E) du rail de guidage (2) au-delà d'un joint (D) par lequel le support d'organe (1) repose, dans l'état intégré, sur au moins un groupe structurel (I) de la structure de porte.

26. Support d'organe selon l'une des revendications précédentes, **caractérisé en ce qu'**un corps creux respectif (3a, 3b), conformé sur le support d'organe (1), est associé à chacun des deux tronçons d'extrémité (2a, 2b) du rail de guidage (2).

27. Support d'organe selon l'une des revendications précédentes, **caractérisé en ce que** l'élément de renvoi (243) agencé sur le corps creux (3a, 3b) est coiffé, dans l'état intégré du support d'organe (1), par un prolongement (F) d'un renfort de ceinture (B) de la structure de porte.

28. Support d'organe selon l'une des revendications précédentes, **caractérisé en ce que** le corps creux (3a, 3b) enferme une cavité et comporte uniquement au niveau d'une face frontale une ouverture (39) dont l'aire de section transversale est orientée sensiblement perpendiculairement à la surface définie par le support d'organe (1).

29. Support d'organe selon la revendication 12, ou selon l'une des revendications 13 à 28 prise en dépendance de la revendication 12, **caractérisé en ce que** le rail de guidage (2) conformé d'une seule pièce sur le support d'organe (1) comporte au moins deux canaux de guidage (K1, K2) qui sont à distance l'un de l'autre transversalement à la direction de déplacement (z) de l'élément d'entraînement (5) définie par la trajectoire de déplacement, et dans chacun desquels est guidé un tronçon de guidage respectif (51, 53 ; 52, 54) de l'élément d'entraînement (5).

30. Support d'organe selon la revendication 29, **caractérisé en ce que** le canal de guidage respectif (K1, K2) est formé par une saillie (21, 22) qui dépasse d'une surface (10) du support d'organe (1) et qui définit, conjointement avec la surface (10) du support d'organe (1), un guidage semblable à un canal pour un tronçon de guidage respectif de l'élément d'entraînement (5).

31. Support d'organe selon la revendication 30, **caractérisé en ce que** la saillie respective (21, 22) comprend un tronçon en équerre (23, 24 ; 23', 24' ; 23", 24"), qui coiffe un tronçon de guidage (51, 53 ; 52, 54) de l'élément d'entraînement (5).

32. Support d'organe selon la revendication 31, **caractérisé en ce que** le tronçon de guidage respectif (51, 53 ; 52, 54) de l'élément d'entraînement (5) entoure un tronçon en équerre (23, 24 ; 23', 24' ; 23", 24").

33. Support d'organe selon l'une des revendications 29 à 32, **caractérisé en ce que** les tronçons en équerre (23, 24 ; 23', 24' ; 23", 24") sont tournés dans des directions différentes.

34. Support d'organe selon la revendication 33, **caractérisé en ce que** les deux tronçons en équerre (23, 24 ; 23', 24' ; 23", 24") sont orientés l'un vers l'autre.

35. Support d'organe selon la revendication 33, **caractérisé en ce que** les deux tronçons en équerre (23, 24 ; 23', 24' ; 23", 24") sont orientés en éloignement l'un de l'autre.

36. Support d'organe selon l'une des revendications 31 à 35, **caractérisé en ce que** les tronçons en équerre (23', 24') s'étendent respectivement en inclinaison par rapport à la surface (10) du support d'organe (1) sur laquelle sont conformées les saillies (21, 22) associées aux tronçons en équerre (23', 24').

37. Support d'organe selon la revendication 36, **caractérisé en ce que** les tronçons en équerre (23', 24') s'étendent de façon inclinée, de telle manière qu'ils sont orientés avec leurs extrémités libres en éloignement de la surface (10) du support d'organe (1).

38. Support d'organe selon l'une des revendications 29 à 37, **caractérisé en ce que**, en supplément desdits au moins deux canaux de guidage (K1, K2), une autre zone de guidage (25) est conformée sur le support d'organe, comme élément constitutif du rail de guidage (2).

39. Support d'organe selon l'une des revendications 29 à 38, **caractérisé en ce que** la zone de guidage supplémentaire (25) s'étend entre les deux canaux de guidage (K1, K2).

40. Support d'organe selon la revendication 39, **caractérisé en ce que** la zone de guidage supplémentaire (25) s'étend le long de la trajectoire de déplacement et à distance des deux canaux de guidage (K1, K2), vue transversalement à la trajectoire de déplacement.

41. Support d'organe selon l'une des revendications 38 à 40, **caractérisé en ce que** la zone de guidage supplémentaire (25) est formée par une saillie qui dépasse d'une surface (10) du support d'organe (1).

42. Support d'organe selon la revendication 41, **caractérisé en ce que** la zone de guidage supplémentaire (25) ne comporte aucun tronçon en équerre.

43. Support d'organe selon l'une des revendications 29 à 42, **caractérisé en ce que** le support d'organe (1) comporte des moulures (15) et/ou des bombements (10a, 10b ; 21a, 22a) dans la région dans laquelle est conformé le rail de guidage (2).

44. Support d'organe selon la revendication de 43, **caractérisé en ce que** les moulures (15) et/ou les bombements (10a, 10b ; 21a, 22a) sont écartés de l'élément d'entraînement (5) guidé sur le rail de guidage (2), de telle manière qu'elles/ils ne forment aucune surface de guidage pour l'élément d'entraînement (5).

45. Support d'organe selon l'une des revendications précédentes, **caractérisé en ce que** le corps creux (3a, 3b) est réalisé comme un ergot creux.

46. Support d'organe selon l'une des revendications précédentes, **caractérisé en ce que** le support d'organe (1) est en matière plastique.

47. Support d'organe selon l'une des revendications précédentes, **caractérisé en ce que** le support d'organe (1) présente, dans la région du rail de guidage (2), un matériau d'épaisseur constante (d).

48. Support d'organe selon l'une des revendications précédentes, **caractérisé en ce que** deux rails de guidage (2), agencés l'un à côté de l'autre et écartés et l'un de l'autre transversalement à leur direction d'extension respective, sont agencés sur le support d'organe (1), chacun desdits rails s'étendant entre un premier et un deuxième tronçon d'extrémité (2a, 2b), un corps creux (3a, 3b) étant conformé en une seule pièce sur le support d'organe (1) dans la région d'au moins un tronçon d'extrémité (2a, 2b) des rails de guidage (2), ledit corps creux s'étendant au-delà d'un tronçon d'extrémité (2a, 2b) des rails de guidage le long de la direction d'extension (E) des rails de guidage (2).
